# EUROPÄISCHE PATENTSCHRIFT

(11) **EP 2 547 512 B1**
(45) Veröffentlichungstag und Bekanntmachung des Hinweises auf die Patenterteilung: **05.10.2016**
(21) Anmeldenummer: 11708037.4
(22) Anmeldetag: 11.03.2011
(51) Int. Cl.: B29C 70/50

(54) **FASERVERBUNDPROFILBAUTEIL SOWIE VERFAHREN UND VORRICHTUNG ZUR KONTINUIERLICHEN HERSTELLUNG**
FIBRE COMPOSITE PROFILE COMPONENT AND PROCESS AND APPARATUS FOR CONTINUOUS PRODUCTION
ÉLÉMENT PROFILÉ COMPOSITE FIBREUX AINSI QUE PROCÉDÉ ET DISPOSITIF DE FABRICATION EN CONTINU

(30) Priorität: 17.03.2010 DE 102010002988
(43) Veröffentlichungstag der Anmeldung: 23.01.2013
(73) Patentinhaber: ZF Friedrichshafen AG, 88046 Friedrichshafen (DE)
(72) Erfinder: HOFMANN, Peter, 82131 Gauting (DE)
(86) Internationale Anmeldenummer: PCT/EP2011/053672
(87) Internationale Veröffentlichungsnummer: WO 2011/113755

(56) Entgegenhaltungen:
- DE-A1- 3 139 222
- GB-A- 2 113 599

## Beschreibung

Die Erfindung betrifft ein Profilbauteil aus Faserverbundwerkstoffen und ein Verfahren sowie eine Vorrichtung zu dessen kontinuierlicher Herstellung.

Profilbauteile aus Faserverbundwerkstoffen sowie Verfahren und Vorrichtungen zu deren auch kontinuierlichen Herstellung sind aus dem Stand der Technik prinzipiell bekannt. Derartige Profilbauteile kommen in den unterschiedlichsten Bereichen der Technik zum Einsatz. Dazu zählen Verstärkungsprofile aller Art zum Bau von beispielsweise Flugzeug- oder Bootsrümpfen nach den Prinzipien des Leichtbaus, konstruktive Standardprofile wie Rohre, Profilträger, Massiv- oder Flachprofile, ferner auch funktionelle Profilbauteile wie beispielsweise Radführungs- oder Blattfederelemente.

Insbesondere einfache Standardprofile mit geradem unveränderlichem Querschnitt über der Profillänge werden seit geraumer Zeit üblicherweise mit den klassischen Pultrusionsverfahren hergestellt. Hierzu werden zumeist Bündel aus Endlos-Verstärkungsfasern zunächst mit einer Harzmatrix getränkt und anschließend durch eine dem Profilquerschnitt entsprechende Formdüse gezogen. Das getränkte Faserbündel nimmt dabei die Form des Düsenprofils an, und wird durch eine unmittelbar an die Düse anschließende Heizung in dieser Form ausgehärtet.

Bekannte Pultrusionsanlagen bzw. -Verfahren produzieren auf diese Weise Endlosprofile, die nach der Härtung beispielsweise auf Trommeln aufgewickelt oder auf Länge abgeschnitten werden können. Typische Pultrusionsprodukte sind dabei Rund-, Flach- oder Eckprofile, die entweder hohl oder als Vollmaterial ausgebildet werden können. Bei der Pultrusion können in beschränktem Maße auch nicht unidirektionale Gewebestrukturen mit eingebunden werden, beispielsweise indem der Formdüse - zusammen mit den unidirektionalen Verstärkungsfasern - auch Gewebelagen zugeführt werden.

Pultrusionsverfahren sind jedoch prinzipiell auf die Herstellung eindimensional linearer bzw. gerade ausgebildeter Profile begrenzt. Diese Beschränkung gilt grundsätzlich, mit nur wenigen Ausnahmen, bei denen es gelungen ist, geringfügig gekrümmte Pultrusionsprofile herzustellen. Diese unterliegen jedoch wiederum zusätzlichen Beschränkungen bezüglich der erzeugbaren Profilquerschnitte.

In jedem Fall sind die bekannten Pultrusionsverfahren jedoch darauf beschränkt, Profile mit glatter, ebener Profiloberfläche und mit gleichzeitig unveränderlichem Profilquerschnitt über der Länge herzustellen. Sowohl profilierte Oberflächen jeglicher Art wie auch eine über der Länge des Profils etwa veränderliche Querschnittsform oder Querschnittsfläche lassen sich mit Pultrusionsverfahren grundsätzlich nicht darstellen. Ebenso erlauben Pultrusionsverfahren keinerlei über der Länge des Profils variable Profileigenschaften, wie sie in Form von verstärkten Krafteinleitungsstellen oder Inserts zur Krafteinleitung bei anspruchsvollen Anwendungen üblicherweise erforderlich sind.

Dies bedeutet, dass derartige Verstärkungen oder Inserts allenfalls nachträglich an einem fertigen Pultrusionsprofil angebracht werden können, womit einerseits aufwändige Nacharbeit erforderlich ist, und andererseits eine mögliche Schwächung der Faserstruktur bzw. des Faserzusammenhalts einhergehen kann.

Nicht zuletzt ist die mit den bekannten Pultrusionsverfahren erreichbare Qualität des fertigen Faserverbundprofils, unter anderem aufgrund eines fehlenden, definierten Verpressungprozesses beim Durchtritt des getränkten Faserbündels durch die Formdüse, eingeschränkt. Insbesondere ist die Erzeugung von Profilbauteilen mit hohem Verstärkungs/Matrix-Volumenverhältnis bei gleichzeitig geringem Lufteinschluss und hoher Maßhaltigkeit, die für anspruchsvolle Anwendungen grundsätzlich gefordert wird, bei den bekannten Pultrusionsverfahren schwer erreichbar bzw. nahezu ausgeschlossen.

Aufgrund der beschriebenen Einschränkungen der bekannten Pultrusionsverfahren müssen anspruchsvolle Bauteile - sowohl was deren Formgebung als auch deren Materialeigenschaften betrifft - somit nach wie vor aufwändig einzeln mittels üblicher Laminierverfahren ggf. aus Prepregs, oder mittels Resin Transfer Moulding bzw. Spritzpressen hergestellt werden.

Da die letztgenannten Verfahren zumeist auf vergleichsweise kleine, mechanisch nicht extrem belastbare Bauteile beschränkt sind, bleibt für besonders anspruchsvolle Funktions- oder Profilbauteile bislang nur der aufwändige schichtweise Aufbau von Profilen und Bauteilen aus Prepregs, mit anschließender Pressung und Aushärtung bis zum Erhalt des fertigen Bauteils. Dementsprechend lang sind die Taktzeiten zur Herstellung jeweils eines Bauteils und entsprechend hoch die damit verbundenen Herstellungskosten.

Aus der DE 31 39 222 A1 ist ein Verfahren und eine Vorrichtung zur kontinuierlichen Herstellung einer profilierten Platte aus Faserverbundwerkstoff bekannt, bei dem Endlos-Faserstränge bzw. -bahnen zwischen umlaufenden Formketten eingeschlossen, mit Matrixwerkstoff imprägniert und ausgehärtet werden. Dieses aus dem Stand der Technik bekannte Verfahren und die zugehörige Vorrichtung sind jedoch auf die kontinuierliche Fertigung von ebenen Platten beschränkt, die allenfalls regelmäßige Einprägungen aufweisen können. Weder können hiermit gekrümmte Profile, noch Profile mit variablem Profilquerschnitt oder variablem Oberflächenverlauf, noch können damit Profile mit örtlichen Verstärkungen und/oder sonstigen über der Länge der Profile variablen Profileigenschaften, wie beispielsweise mit lokal verstärkten Krafteinleitungsstellen oder Inserts, hergestellt werden.

Die GB 2 113 599 A betrifft Verbesserungen auf dem Gebiet von verstärkten Plastikverbundkörpern, insbesondere solcher mit einem ungleichen Längsquerschnitt, sowie eine Vorrichtung und ein Verfahren, um diese herzustellen. Bei dieser Vorrichtung und dem Verfahren wirkt die Gestaltungs- und Formungssenke, die in Längsrichtung linear ist, im allgemeinen auf das Verbundmittel, so dass Größe und Form der Senke und des Verbundmittels in seiner Größe und Form gehärtet ist, wenn es bei der Gestaltungs- und Formungssenke austritt.

Mit diesem Hintergrund ist es Aufgabe der vorliegenden Erfindung, ein Faserverbundprofilbauteil sowie ein zugehöriges Verfahren und eine Vorrichtung zu dessen Herstellung bereitzustellen, womit die genannten Nachteile des Standes der Technik überwunden werden. Insbesondere soll die Erfindung dabei ermöglichen, qualitativ hochwertige Profilbauteile aus Faserverbundwerkstoffen mit kurzen Taktzeiten sowie kostengünstig in hohen Stückzahlen und mit reproduzierbar hoher Qualität kontinuierlich herstellen zu können. Dabei sollen gleichzeitig fast alle Beschränkungen der aus dem Stand der Technik bekannten Pultrusionsverfahren überwunden werden in der Form, dass auch Profile mit veränderlichem Querschnitt über der Länge, wie auch Profile mit gleichförmig gekrümmter - oder in sonstiger Weise von der geraden Form abweichend verlaufender - Profilachse hergestellt werden können. Nicht zuletzt ist es auch Aufgabe der Erfindung, die dergestalt produzierten Profile bereits unmittelbar bei der Urformung mit lokalen Verstärkungen, Aufdickungen, Anbauteilen oder Inserts insbesondere zur Krafteinleitung versehen zu können. Auf diese Weise soll Nacharbeit bzw. das Erfordernis einer nachträglichen Anbringung insbesondere von Krafteinleitungselementen an den produzierten Profilen möglichst vollständig entfallen.

Diese Aufgabe wird durch ein Verfahren gemäß Patentanspruch 1, durch eine Vorrichtung mit den Merkmalen des Patentanspruchs 11, bzw. durch ein Profilbauteil mit den Merkmalen des Patentanspruchs 26 gelöst. Bevorzugte Ausführungsformen sind jeweils Gegenstand der Unteransprüche.

Das erfindungsgemäße Verfahren dient zur kontinuierlichen Herstellung von Profilbauteilen aus Faserverbundwerkstoff mittels einer ebenfalls erfindungsgemäßen Formkettenanlage, wobei der Faserverbundwerkstoff einen Matrixwerkstoff und eine im Matrixwerkstoff angeordnete Verstärkungsfaseranordnung umfasst.

Bei dem erfindungsgemäßen Verfahren erfolgt in einem ersten Verfahrensschritt a) zunächst eine Zuführung von Endlos-Fasersträngen, von Endlos-Fasergeweben und/oder von Endlos-Gestrick- bzw. Vliesbahnen zu der Formkettenanlage. Der Begriff "Endlos-" steht dabei für im Wesentlichen beliebig lange Stränge bzw. Bahnen, die beispielsweise von Spulen bzw. Rollen abgewickelt und der Produktionsanlage kontinuierlich zugeführt werden können, wie dies für sich genommen auch von den Pultrusionsverfahren bekannt ist.

Anschließend erfolgt in einem weiteren Verfahrensschritt b) eine Zusammenführung der Stränge und/oder Bahnen zunächst zu einem Endlos-Vorformbündel. In einem weiteren Verfahrensschritt c) wird das Vorformbündel sodann an einem Arbeitstrum zumindest einer umlaufenden Formkette der Formkettenanlage zur Anlage gebracht. Das Vorformbündel wird sodann in einem weiteren Verfahrensschritt d) durch das Arbeitstrum der Formkette durch die Formkettenanlage geführt, wobei durch gleichzeitige Härtung des Matrixwerkstoffs aus dem Vorformbündel ein Endlosprofil gebildet wird.

In nachfolgenden Verfahrensschritten e) und f) erfolgt sodann ein Ausstoß des Endlosprofils aus der Formkettenanlage sowie die Ablängung des Endlosprofils zum Profilbauteil.

Dabei ist das Arbeitstrum der zumindest einen Formkette entlang einer Gleitführung auf der dem Vorformbündel abgewandten Seite des Arbeitstrums gleitend geführt, und die Außenoberfläche der Formkette ist durch Oberflächenglieder gebildet.

Erfindungsgemäß zeichnet sich das Verfahren dadurch aus, dass das erzeugte Profilbauteil im Verfahrensschritt d) anhand zumindest einer Krümmung der Gleitführung für die Formkette und/oder anhand unterschiedlicher Höhen und Oberflächenprofile der Formketten-Oberflächenglieder einen im Wesentlichen beliebig wählbaren Verlauf hinsichtlich seiner Längsachse, hinsichtlich seiner Querschnittsform und/oder hinsichtlich seiner Längsoberfläche erhält.

Bei dem erfindungsgemäßen Verfahren sind die zugeführten Stränge bzw. Bahnen wahlweise vorgetränkt, wie dies beispielsweise bei Prepreg-Strängen bzw. -Bahnen der Fall ist. Alternativ oder zusätzlich können die zugeführten Stränge bzw. Bahnen auch während eines der Verfahrensschritte a), b) oder c) mit dem Matrixwerkstoff getränkt werden.

Die Tränkung der Stränge bzw. Bahnen in den Verfahrensschritten a) oder b) kann dabei - ähnlich wie bei den bekannten Pultrusionsverfahren - dadurch erfolgen, dass die Stränge bzw. Bahnen zunächst durch ein Bad mit flüssigem Matrixwerkstoff, beispielsweise durch ein Harzbad, gezogen werden, und den Matrixwerkstoff so aufnehmen. Alternativ oder zusätzlich kann die Tränkung der Stränge bzw. Bahnen auch im bzw. unmittelbar vor dem Verfahrensschritt c) erfolgen, indem der flüssige Matrixwerkstoff dem Vorformbündel - beispielsweise durch einen um das Vorformbündel verlaufenden Ringkanal - zugeführt und von dort in das Vorformbündel injiziert wird.

Das erfindungsgemäße Verfahren erlaubt somit, Profilbauteile in einem kontinuierlichen Prozess herzustellen und dabei gleichzeitig die Beschränkungen der aus dem Stand der Technik bekannten Herstellungsverfahren (sowohl der Pultrusionsverfahren als auch der Laminier- oder Injektionsverfahren) komplett zu überwinden.

Insbesondere wird es - dank der erfindungsgemäßen Anlage und Führung des Vorformbündels an der zumindest einen umlaufenden Formkette, welche wiederum entlang einer Gleitführung geführt ist - möglich, dem aus dem Vorformbündel gebildeten Endlosprofil und damit dem Profilbauteil einen weitgehend beliebigen, auch variablen Verlauf seiner Querschnittsform bzw. Längsachse über der Länge des Profilbauteils zu verleihen. Dies hängt damit zusammen, dass die Formkette - nach dem Prinzip einer mit dem aushärtenden Vorformbündel axial mitlaufenden Urform - ihre Oberflächenkontur bei der Aushärtung des Vorformbündels exakt auf das Vorformbündel überträgt. Jeder Vorsprung, jede Ausnehmung wie auch jedes Oberflächen- oder Krümmungsprofil der mitlaufenden Formkette bzw. der Gleitführung wird sich daher in der Formgebung des aushärtenden Vorformbündels und damit auch des fertigen Profilbauteils niederschlagen.

Alternativ oder zusätzlich zu einer etwa vorhandenen Profilierung der Oberfläche der zumindest einen Formkette kann das Arbeitstrum der Formkette dabei insbesondere auch entlang einer kreisabschnittsförmig gekrümmten Bahn verlaufen. Ebenso kann die Formkettenanlage auch eine Mehrzahl von Formketten, insbesondere zwei einander gegenüberliegende Formketten, und ggf. zusätzliche Führungsplatten umfassen, die das Vorformbündel längsseits einschließen, und ihm beim Durchlaufen der Formkettenanlage somit die gewünschte Gestalt verleihen. Im Einzelnen ist dies weiter unten bei der Beschreibung der erfindungsgemäßen Formkettenanlage näher ausgeführt.

Dies bedeutet mit anderen Worten, dass sich dank des erfindungsgemäßen Verfahrens Profilbauteile aus Faserverbundwerkstoff kontinuierlich herstellen lassen, die nicht nur einen weitgehend beliebigen Verlauf oder eine weitgehend beliebige Oberflächenstruktur zumindest einer der Längsoberflächen des Profilbauteils aufweisen (nämlich derjenigen Längsoberfläche, die bei der Aushärtung der zumindest einen Formkette zugewandt ist). Vielmehr kann dank der Erfindung - alternativ oder zusätzlich - auch die Längsachse des Profilbauteils einen nahezu beliebigen von der geraden Form abweichenden oder auch kreissegmentförmig gekrümmten Verlauf aufweisen. Dies kann dank der Erfindung beispielsweise dadurch erreicht werden, dass zwei gegenüberliegende Formketten mit entsprechendem, miteinander korrespondierendem Oberflächenverlauf für die Formgebung des Vorformbündels eingesetzt werden. Alternativ oder zusätzlich kann die zumindest eine Formkette bzw. können zwei gegenüberliegende Formketten so angeordnet und geführt werden, dass das Arbeitstrum jeweils entlang einer kreissegmentförmig gekrümmten Bahn verläuft, wodurch Profile mit dementsprechend gekrümmter Profillängsachse hergestellt werden können.

Mit diesem Hintergrund ist es gemäß einer besonders bevorzugten Ausführungsform des erfindungsgemäßen Verfahrens vorgesehen, dass die Formkettenanlage zwei Formketten umfasst, wobei die Anlage und Führung des Vorformbündels im Verfahrensschritt c) am jeweiligen Arbeitstrum beider Formketten erfolgt. Vorzugsweise umfasst die Formkettenanlage alternativ oder zusätzlich zumindest eine Führungsplatte, wobei die Anlage und Führung des Vorformbündels im Verfahrensschritt c) am Arbeitstrum der zumindest einen Formkette und zusätzlich an der zumindest einen Führungsplatte erfolgt. Dabei schließt das Arbeitstrum der zumindest einen Formkette und die zumindest eine Führungsplatte das Vorformbündel längsseits allseitig ein.

Der längsseits allseitige Einschluss des Vorformbündels durch die zumindest eine Formkette und die zumindest eine Führungsplatte kann beispielsweise dadurch erfolgen, dass eine Führungsplatte eine das Vorformbündel an bis zu drei Längsseiten einschließende Ausnehmung bzw. Formgebung aufweist, während eine vierte Längsseite des Vorformbündels am Arbeitstrum der Formkette zur Anlage kommt. Ebenso können zwei gegenüberliegende Formketten das Vorformbündel an dementsprechend zwei gegenüberliegenden Längsseiten einschließen, während zwei einander gegenüber angeordnete Führungsplatten das Vorformbündel an den beiden restlichen Längsseiten einschließen. Auch diese Varianten sind weiter unten bei der Beschreibung der Formkettenanlage im einzelnen ausgeführt.

Vorzugsweise werden die einander - bezüglich des Arbeitsweges des Vorformbündels durch die Formkettenanlage - jeweils gegenüber angeordneten Formketten bzw. Führungsplatten, durch die das Vorformbündel längsseits bevorzugt allseitig eingeschlossen wird, mittels einer Vorspanneinrichtung gegeneinander gepresst. Auf diese Weise lässt sich ein definierter seitlicher Pressdruck auf das Vorformbündel ausüben, während dieses die Formkettenanlage durchläuft und dabei aushärtet. Überschüssiger, noch flüssiger Matrixwerkstoff kann - ebenso wie unerwünschte Lufteinschlüsse - auf diese Weise aus dem Vorformbündel vor der Aushärtung herausgepresst werden. Hierdurch lässt sich das bei anspruchsvollen Bauteilen zumeist gewünschte hohe Verstärkungs/Matrix-Volumenverhältnis definiert einstellen, und gleichzeitig wird eine hohe Werkstoffqualität bei gleichzeitig hoher Maßhaltigkeit des erzeugten Profilbauteils erreicht.

Eine besonders bevorzugte Ausführungsform des erfindungsgemäßen Verfahrens sieht vor, dass das Arbeitstrum der zumindest einen Formkette ebenso wie eine oder mehrere etwa vorhandene Führungsplatten, die zusammen das Vorformbündel durch die Formkettenanlage führen und bei dessen Aushärtung einschließen, beheizt werden. Auf diese Weise lässt sich die Aushärtung des Matrixwerkstoffs bei den meisten Werkstoffen entscheidend beschleunigen, und es werden entsprechend hohe Durchlaufgeschwindigkeiten und ein hoher Stückzahlausstoß der Formkettenanlage erreicht. Falls es sich beim Matrixwerkstoff beispielsweise um einen Thermoplastwerkstoff handelt, können die Formketten bzw. Führungsplatten stattdessen auch gekühlt werden.

Gemäß einer weiteren bevorzugten Ausführungsform des erfindungsgemäßen Verfahrens wird in einem weiteren Verfahrensschritt a') zumindest ein Einlageteil zwischen bzw. auf den zugeführten Strängen, Geweben, Gestricken bzw. Vliesen positioniert, damit in das Vorformbündel eingebunden, und beim Weg des Vorformbündels durch die Formkettenanlage somit in das Endlosprofil einlaminiert bzw. auf das Endlosprofil auflaminiert. Bei dem zumindest einen Einlageteil handelt es sich vorzugsweise um einen flächigen Prepreg-Zuschnitt, einen Gewebe-, Gestrick- bzw. Vlies-Zuschnitt, oder um ein Krafteinleitungsbauteil.

Diese Ausführungsform der Erfindung erlaubt mit anderen Worten erstmals, Profilbauteile im kontinuierlichen Durchlaufverfahren herzustellen, die nicht nur variable Querschnittsformen oder nahezu beliebige Verläufe der Profillängsachse aufweisen können, sondern die an definierten, beispielsweise besonders hochbelasteten Stellen auch bereits mit zusätzlichen Faserlagen und/oder mit Einlegeteilen zur Krafteinleitung versehen sein können.

Mit anderen Worten sind dank dieser Ausführungsform des erfindungsgemäßen Verfahrens der Gestaltungsfreiheit auch bei Profilbauteilen, die - insbesondere aus Kostengründen - im kontinuierlichen Durchlaufverfahren hergestellt werden sollen oder müssen, nahezu keine Grenzen mehr gesetzt. Dank der Erfindung lassen sich Profilbauteile vielmehr mit unterschiedlichsten Krümmungen, unterschiedlichsten Verläufen der Profillängsachse oder unterschiedlichsten Querschnittsverläufen über der Bauteillänge ebenso im kontinuierlichen Durchlaufverfahren herstellen wie Profilbauteile mit Verdickungen, örtlichen Verstärkungen und mit bereits fertig einlaminierten Krafteinleitungsteilen.

Da derartige, komplexe Profilbauteile bisher fast ausschließlich mittels weitgehend manueller Laminierverfahren Stück für Stück gefertigt werden müssen, stellt das erfindungsgemäße Verfahren einen entscheidenden Fortschritt im Hinblick auf eine kostengünstige Serienfertigung auch von anspruchsvollsten Profilbauteilen insbesondere mit hoher, reproduzierbarer Bauteilqualität dar.

Gemäß einer weiteren bevorzugten Ausführungsform des erfindungsgemäßen Verfahrens wird im Verfahrensschritt c) ein biegeelastisches Band - zusammen mit dem Vorformbündel - durch die Formkettenanlage geführt. Das biegeelastische Band ist dabei zwischen dem Vorformbündel und der zumindest einen Formkette, bzw. zwischen dem Vorformbündel und der zumindest einen Führungsplatte angeordnet, und bildet damit eine Anlagefläche für eine der längsseitigen Oberflächen des Vorformbündels beim Durchlauf durch die Formkettenanlage. Dies ist vorteilhaft insbesondere im Hinblick auf eine bessere Trennung des noch nicht ausgehärteten Matrixwerkstoffs von den Oberflächen der Formkettenanlage, besonders von der Oberfläche der zumindest einen Formkette, ebenso wie im Hinblick auf eine besonders hohe Qualität der Oberfläche des zu produzierenden Profilbauteils.

Das mitgeführte, zwischen Vorformbündel und Formkette bzw. Führungsplatte angeordnete biegeelastische Band verhindert somit die Benetzung von Führungsplatten bzw. Formketten mit dem noch nicht ausgehärteten Matrixwerkstoff sowie die unerwünschte Anhaftung des Matrixwerkstoffs an Führungsplatten oder Formketten. Im Fall eines zwischen Vorformbündel und Formkette mitgeführten biegeelastischen Bandes erfolgt zudem eine Überbrückung von zwischen den Kettengliedern der Formkette etwa vorhandenen Spalten oder Unebenheiten, welche sich somit nicht mehr in die Oberfläche des zu produzierenden Profilbauteils einprägen und die Oberflächenqualität damit beeinträchtigen können.

Die Verwendung des Attributs "biegeelastisch" in Bezug auf das zwischen Vorformbündel und Formkette bzw. Führungsplatte anordenbare Band betrifft hauptsächlich die spaltüberbrückende und glättende Funktion des biegeelastischen Bandes, wozu eine bestimmte, nicht zu niedrige Biegeelastizität erforderlich ist. Unabhängig davon kann das biegeelastische Band auch eine gewisse Längselastizität aufweisen, welche jedoch zunächst nicht von entscheidender Bedeutung für die in Rede stehende Ausführungsform der Erfindung ist.

Die Erfindung betrifft ferner eine Formkettenanlage für die kontinuierliche Herstellung von Faserverbundwerkstoff-Profilbauteilen anhand eines endlos-Vorformbündels aus einer mit einem Matrixwerkstoff getränkten Verstärkungsfaseranordnung. Die Formkettenanlage umfasst hierzu zumindest eine erste, endlos umlaufende Formkette mit einem Arbeitstrum, das dem Arbeitsweg des Vorformbündels durch die Formkettenanlage zugewandt ist, wobei die zumindest eine Formkette der Formgebung, Führung und Kompression des Vorformbündels während der Härtung des Matrixwerkstoffs beim Durchlauf durch die Formkettenanlage dient. Dabei ist das Arbeitstrum der zumindest einen Formkette entlang einer Gleitführung auf der dem Vorformbündel abgewandten Seite des Arbeitstrums gleitend geführt, und die Außenoberfläche der Formkette wird durch Oberflächenglieder der Formkette gebildet.

Erfindungsgemäß zeichnet sich die Formkettenanlage dadurch aus, dass die Oberfläche des Arbeitstrums der zumindest einen Formkette - anhand zumindest einer Krümmung der Gleitführung und/oder anhand unterschiedlicher Höhen und Oberflächenprofile der Oberflächenglieder - einen im Wesentlichen beliebig variablen Verlauf hinsichtlich der Längsachse des Endlosprofils, hinsichtlich der Querschnittsform des Endlosprofils und/oder hinsichtlich der Längsoberfläche des Endlosprofils aufweist.

Auf diese Weise ergibt sich entlang des Arbeitstrums der Formkette erfindungsgemäß das gewünschte Profil mit nahezu frei gestaltbarem, variablem Profilquerschnitt, nahezu beliebiger Gestalt der Profiloberfläche bzw. nahezu beliebigem Verlauf der Profillängsachse für das Vorformbündel und damit auch für das fertige Profilbauteil. Dank der Erfindung sind somit der kontinuierlichen Produktion von Profilbauteilen mit nahezu beliebiger Formgebung, mit nahezu beliebigen Querschnittsformen und mit nahezu beliebigem Verlauf der Profillängsachse fast keine Grenzen mehr gesetzt. Vielmehr lassen sich mit der Formkettenanlage erfindungsgemäß nicht nur gerade oder gleichförmig gekrümmte Profilbauteile mit im Wesentlichen konstantem Querschnitt über der Länge herstellen, sondern es können auch gerade, ungleichförmig gekrümmte oder unregelmäßig geformte Profilbauteile ggf. mit großflächigen Inserts, Einlagen, Verstärkungen, Krafteinleitungspunkten oder Verbindungsstellen, unmittelbar im Durchlauf durch die Formkettenanlage, kontinuierlich produziert werden.

Die Erfindung wird dabei zunächst unabhängig vom konkreten Verlauf der Formkette sowie von der konstruktiven Ausführung der Formkette, von deren Antrieb und deren Abstützung verwirklicht, solange die Formkette die gewünschte Führungs- und Kompressionsfunktion für das Vorformbündel während dessen Durchlaufs durch die Formkettenanlage erfüllt. In jedem Fall jedoch lässt sich infolge der Anordnung der Gleitführung auf der dem Vorformbündel abgewandten Seite des Arbeitstrums der Formkette der Weg des Arbeitstrums der Formkette bei der Führung des Vorformbündels durch die Formkettenanlage exakt definieren bzw. kontrollieren.

Gemäß einer bevorzugten Ausführungsform der erfindungsgemäßen Formkettenanlage beschreibt die Gleitführung einen Radius entlang des Wegs des Arbeitstrums der Formkette. Dies bedeutet mit anderen Worten, dass die Form der Gleitführung und damit auch die Form des Arbeitstrums der Formkette im Wesentlichen einem Kreissegment entspricht. Vorzugsweise ist der Radius des Verlaufs der Gleitführung dabei variabel einstellbar. Auf diese Weise lassen sich mit der erfindungsgemäßen Formkettenanlage insbesondere kreisbogenförmig gekrümmte Profilbauteile mit im Wesentlichen beliebigem Krümmungsradius im Durchlaufverfahren herstellen.

Im Hinblick auf eine hohe Steifigkeit der gesamten Anlage können die Gleitführungen dabei in Führungsschienen gelagert sein, die insbesondere direkt auf dem Fabrikationsfußboden gelagert oder in den Fabrikationsfußboden eingelassen sind. So können auf einfache Weise verschiedene Biegeradien für die Gleitführungen eingestellt werden. Dies gilt insbesondere dann, wenn die Formkettenanlage eine Größe überschreiten sollte, die noch in einem Maschinenbett gelagert werden kann.

Mit dem Hintergrund der variablen Einstellbarkeit des Radius der Gleitführung und damit des Arbeitstrums der Formkette ist es gemäß einer weiteren bevorzugten Ausführungsform der Erfindung vorgesehen, dass die Oberflächenglieder, durch welche die Außenoberfläche der Formkette gebildet wird, relativ zueinander jeweils zumindest geringfügig entlang der Kettenlängsrichtung bewegbar sind.

Auf welche Weise die relative Längsbeweglichkeit der Oberflächenglieder entlang der Kettenlängsrichtung konstruktiv verwirklicht wird, ist für die Erfindung zunächst einmal unerheblich. Die Oberflächenglieder können zu diesem Zweck beispielsweise auf einer die Oberflächenglieder tragenden Grundkette in Längsrichtung der Formkette um ein gewisses Maß schwimmend gelagert angeordnet sein, so dass sich eine begrenzte Relativbeweglichkeit jedes der Oberflächenglieder entlang der Längsrichtung der Formkette ergibt.

Die Längsbeweglichkeit der Oberflächenglieder der Formkette dient dazu, der Formkette auch bei unterschiedlichen jeweils eingestellten Krümmungsradien eine weitestgehend nahtlose, geschlossene Oberfläche zu verleihen, und ist in diesem Zusammenhang erforderlich, da die Oberflächenglieder der Formkette stets ein gewisses Dickenmaß aufweisen. Aus diesem Grund ergibt sich bei dem gewünschten - auch bei unterschiedlichen Krümmungsradien des Kettenverlaufs - nahtlosen gegenseitigen Anschluss des Kopfbereichs der Oberflächenglieder (im Bereich der Kettenoberfläche) das Erfordernis eines zumindest geringfügig variablen Abstands der Oberflächenglieder in deren Fußbereich, bzw. im Bereich der Verbindung der Oberflächenglieder mit der tragenden Grundkette.

Vorzugsweise weisen die Oberflächenglieder der Formkette dabei - ausgehend von ihrer kopfseitigen Oberfläche - einen Hinterschnitt bzw. eine zum Fußbereich hin abnehmende Breite in Längsrichtung der Kette auf. Der Hinterschnitt ermöglicht es dem Arbeitstrum der Formkette nicht nur konkave, sondern auch konvexe Krümmungen anzunehmen, ohne dass Spalten - aufgrund eines fußseitigen Aneinanderstoßens der Oberflächenglieder - zwischen den kopfseitigen Flächen der Oberflächenglieder entstehen würden.

Prinzipiell - beispielsweise zur Herstellung von vergleichsweise einfachen, ebenen oder gekrümmten Flachprofilen - lässt sich die vorliegende Erfindung bereits mit einer einzigen Formkette verwirklichen, an der das Vorformbündel während der Aushärtung des Matrixwerkstoffs zur Anlage gebracht wird.

Mit dem Hintergrund der Herstellung auch aufwändigerer Profilformen oder anspruchsvollerer Profilbauteile ist es gemäß weiterer Ausführungsformen der Erfindung vorgesehen, dass die Formkettenanlage zumindest eine Führungsplatte bzw. zumindest eine weitere Formkette aufweist. Dabei ist die Führungsplatte bzw. die weitere Formkette - entlang der ersten Formkette - gegenüber dem Vorformbündel, d.h. jenseits des Arbeitswegs des Vorformbündels angeordnet. Alternativ oder zusätzlich kann auch im rechten Winkel zu der zumindest einen Formkette zumindest eine Führungsplatte entlang des Arbeitswegs des Vorformbündels angeordnet sein.

Auf diese Weise lässt sich ein bevorzugt allseitiger Einschluss des Vorformbündels an dessen Längsseiten während des Durchlaufs durch die Formkettenanlage sowie eine dementsprechend definierte Formgebung aller Längsoberflächen, und damit der Querschnittsform des zu produzierenden Profilbauteils erzielen.

Ein längsseits allseitiger Einschluss des Vorformbündels kann dabei beispielsweise bereits durch eine Formkette und eine der Formkette gegenüberliegende Führungsplatte erfolgen, wobei die Führungsplatte eine - das Vorformbündel an bis zu drei Längsseiten einschließende - Ausnehmung der Querschnittsform aufweist, während die vierte Längsseite des Vorformbündels am Arbeitstrum der Formkette zur Anlage kommt.

Eine andere Möglichkeit für den längsseits allseitigen Einschluss des Vorformbündels beim Durchlauf durch die Formkettenanlage besteht darin, dass zwei einander gegenüberliegende Formketten vorgesehen sind, die das Vorformbündel an dementsprechend zwei gegenüberliegenden Längsseiten einschließen, während zwei im rechten Winkel zu den Formketten angeordnete, im wesentlichen ebene Führungsplatten die beiden anderen Längsseiten des Vorformbündels einschließen.

In allen diesen lediglich beispielhaft und nicht abschließend aufgezählten Fällen erfolgt ein bezüglich der Längsseiten allseitiger Einschluss des Vorformbündels und damit eine genau definierbare Formgebung der Oberflächen bzw. des Querschnitts des zu produzierenden Profilbauteils.

Dabei ist gemäß einer weiteren besonders bevorzugten Ausführungsform der Erfindung vorgesehen, dass - bezüglich des Arbeitswegs des Vorformbündels - einander gegenüber angeordnete Formketten und/oder Führungsplatten der Formkettenanlage mittels einer Vorspanneinrichtung aufeinander zu (bzw. in Richtung auf das Vorformbündel) zusammengepresst werden, oder dementsprechend kontrolliert aufeinander zugestellt werden können.

Durch diese Möglichkeit des Zusammenpressens bzw. Zustellens zweier einander gegenüber angeordneter Formketten oder Führungsplatten lässt sich die zu produzierende Bauteilqualität besonders genau kontrollieren bzw. einstellen. Auf diese Weise wird es insbesondere möglich, den Matrixgehalt bzw. das gewichts- oder volumenbezogene Matrix/Verstärkungs-Verhältnis exakt vorzugeben und somit Bauteile reproduzierbar mit besonders hoher Materialqualität und mechanischer Belastbarkeit herzustellen. Durch die so gegebene Möglichkeit des Zusammenpressens des Vorformbündels während des gesamten Weges durch die Formkettenanlage und damit während des gesamten Aushärtungsprozesses können zudem unerwünschte Lufteinschlüsse nahezu vollständig unterbunden werden.

Die Erfindung wird zunächst einmal unabhängig von der konstruktiven Ausführung und der Gestalt der zumindest einen Formkette realisiert, solange sich das Vorformbündel während seines Durchlaufs durch die Formkettenanlage mittels der zumindest einen Formkette führen und ggf. komprimieren lässt. Im Hinblick auf einen möglichst dichten Einschluss des Vorformbündels an dessen Längsseiten und im Hinblick auf eine möglichst hohe Oberflächenqualität des zu produzierenden Profilbauteils ist gemäß einer besonders bevorzugten Ausführungsform der Erfindung jedoch vorgesehen, dass die Formkette auf ihrer dem Vorformbündel zugewandten Außenseite eine im Wesentlichen glatte, geschlossene Kettenoberfläche bildet.

Alternativ oder zusätzlich hierzu sieht eine weitere Ausführungsform der Erfindung vor, dass zwischen dem Arbeitstrum der Formkette und dem Arbeitsweg des Vorformbündels durch die Formkettenanlage ein biegeelastisches Band beispielsweise aus Kunststoff oder Metall angeordnet ist.

Das biegeelastische Band zwischen dem Arbeitstrum der Formkette und dem Vorformbündel kann dabei einerseits einer besseren Trennwirkung zwischen dem zunächst noch flüssigen Matrixwerkstoff des Vorformbündels und der Formkette dienen, so dass eine Benetzung der Formkette mit dem noch flüssigen Matrixwerkstoff weitgehend unterbleibt. Zudem verbessert das biegeelastische Band auch die Qualität der Oberfläche des fertigen Profilbauteils, indem etwaige Spalten bzw. Unebenheiten an der Oberfläche der Formkette, insbesondere im Bereich der Übergänge zwischen zwei Kettengliedern, durch das biegeelastische Band egalisiert werden.

Gemäß einer möglichen Ausführungsform der Erfindung ist dabei das biegeelastische Band entlang der Außenseite der Formkette angeordnet und läuft zusammen mit der Formkette in der Formkettenanlage um. Das biegeelastische Band muss dabei nicht zwangsläufig dieselbe Länge wie die Außenseite der Formkette aufweisen, sondern kann zumindest auf Teilen seiner Länge auch separat von der Formkette geführt werden.

Eine andere Ausführungsform der Erfindung sieht vor, dass das biegeelastische Band der Formkettenanlage bzw. dem Arbeitsweg des Vorformbündels zusammen mit den Fasersträngen und/oder mit den Gewebe-, Gestrick- bzw. Vliesbahnen zugeführt wird. Das in diesem Fall (ähnlich wie die Faserstränge und/oder Gewebe-, Gestrick- bzw. Vliesbahnen) als Endlosmaterial zugeführte biegeelastische Band wird ebenfalls zwischen einer Oberfläche des Vorformbündels und einer Formkette angeordnet und dient dort wieder als Trennlage bzw. als glättende Zwischenlage zwischen der Oberfläche der Formkette und der Oberfläche des zu produzierenden Profilbauteils. Nach dem Ausstoß des ausgehärteten Endlosprofils aus der Formkettenanlage kann das zuvor als Endlosmaterial zugeführte biegeelastische Band - je nach Ausführung, Material und Funktion - von der Oberfläche des Endlosprofils entfernt und ggf. wiederverwendet werden. Das biegeelastische Band kann bei einer anderen Ausführungsform jedoch auch auf der Oberfläche des Endlosprofils, und damit auf der Oberfläche des schlussendlich produzierten Profilbauteils verbleiben.

Gemäß weiterer Ausführungsformen der Erfindung kann die dem Vorformbündel zugewandte Oberfläche des biegeelastischen Bandes (oder die dem Vorformbündel zugewandte Oberfläche der Formkette, falls kein biegeelastisches Band zwischen Vorformbündel und Formkette verwendet wird) ein nicht glattes Oberflächenprofil aufweisen.

Auf diese Weise kann das Profilbauteil unmittelbar bei der Urformung mittels der Formkettenanlage eine der Oberflächenstruktur von Formkette bzw. biegeelastischem Band entsprechende, nicht glatte bzw. geprägte Oberfläche erhalten. Hierbei sind diverse Arten von Oberflächenstrukturen denkbar, wie beispielsweise Längs- oder Querrillen auf der Formteiloberfläche, Noppen, Vertiefungen oder Mikroprismenstrukturen, die unmittelbar bei der kontinuierlichen Herstellung des Profilbauteils in dessen Oberfläche eingeformt werden können.

Gemäß einer weiteren bevorzugten Ausführungsform der erfindungsgemäßen Formkettenanlage ist es vorgesehen, dass die Formkettenanlage eine Einrichtung zur Zuführung von Einlageteilen, Verstärkungslagen und dergleichen sowie zur Positionierung der Einlageteile bzw. Verstärkungslagen in oder auf dem Vorformbündel aufweist.

Die Einlageteile bzw. Verstärkungslagen können dabei insbesondere im Bereich der Zuführung der Endlosstränge bzw. Endlosbahnen zur Formkettenanlage zugeführt und jeweils auf bzw. zwischen den zugeführten Endlossträngen bzw. Endlosbahnen so positioniert werden, dass die Einlageteile bzw. Verstärkungslagen bis zum Eintritt des Vorformbündels in die Formkettenanlage Bestandteil des Vorformbündels werden. Sofern die Einlageteile bzw. Verstärkungslagen zu lokalen Veränderungen der Querschnittsfläche des Vorformbündels führen, was in den meisten Fällen der Fall sein wird, wird die Oberfläche der Formkette durch entsprechende Formgebung der einzelnen Kettenglieder so angepasst, dass die Formkette die entsprechenden, lokalen Veränderungen der Querschnittsfläche des Vorformbündels aufnehmen und während des Härtungsprozesses beim Durchlauf durch die Formkettenanlage entsprechend kontrolliert einschließen kann.

Beispiele für mögliche Einlageteile oder Verstärkungslagen sind nahezu unbegrenzt, insbesondere kann es sich dabei um Gewebe-, Gestrick- bzw. Vlies-Zuschnitte, um Prepreg-Zuschnitte und/oder um konstruktive bzw. Krafteinleitungsbauteile wie beispielsweise Platten, Inserts oder Gewindeaufnahmen handeln.

Die Erfindung betrifft ferner ein Profilbauteil aus Faserverbundwerkstoff, welches nach einem Verfahren und mittels einer Formkettenanlage gemäß einer der oben beschriebenen Ausführungsformen hergestellt ist. Das Profilbauteil weist dabei einen im Wesentlichen beliebig variablen Verlauf der Längsachse, der Querschnittsform und/oder der Längsoberfläche über der Länge des Profilbauteils auf.

Die Profillängsachse des erfindungsgemäßen Profilbauteils kann dank der Formkettenanlage somit - erstmalig bei einem im Durchlaufverfahren endlos hergestellten Profil - einen nahezu beliebigen, z.B. gleichförmig oder ungleichförmig gekrümmten Verlauf aufweisen, ebenso wie Form und Größe des Profilquerschnitts, bzw. die Längsoberfläche des Profilbauteils einen nahezu beliebigen Verlauf über der Länge des Profilbauteils aufweisen können.

Gemäß einer weiteren Ausführungsform des erfindungsgemäßen Profilbauteils ist vorgesehen, dass das Profilbauteil zumindest ein Einlageteil in Form eines Gewebe-, Gestrick- bzw. Vlies-Zuschnitts, in Form eines Prepreg-Zuschnitts und/oder in Form eines Krafteinleitungsbauteils aufweist. Vorzugsweise besitzt dabei das Profilbauteil im Bereich der Position des zumindest einen Einlageteils eine Verdickung im Profilquerschnitt, die bei der Produktion durch eine entsprechende Profilierung der Kettenglieder der Formkette ermöglicht wird. Diese Ausführungsform hat den Vorteil, dass das Profilbauteil weitestgehend einbaufertig vorliegt, einschließlich der erwünschten Einlageteile, nachdem es die Formkettenanlage in Form des ausgehärteten Endlosprofils - und nach entsprechender Ablängung - verlässt.

Eine weitere mögliche Ausführungsform für das erfindungsgemäße Profilbauteil sieht vor, dass das Profilbauteil auf zumindest einer seiner Längsoberflächen ein nicht glattes Oberflächenprofil aufweist. Auch dies wird dank der Herstellung des Profilbauteils anhand der ebenfalls erfindungsgemäßen Formkettenanlage möglich, insbesondere indem die dem Profilbauteil zugewandte Oberfläche der Formkette, bzw. ein zwischen Formkette und Profilbauteil etwa angeordnetes biegeelastisches Band, eine Oberflächenprägung aufweist, die sich beim Durchlauf des Vorformbündels durch die Formkettenanlage auf die Oberfläche des zu produzierenden Profilbauteils überträgt.

Das erfindungsgemäße Profilbauteil lässt sich grundsätzlich in allen Bereichen der Technik einsetzen, in denen hochbelastbare Bauteile aus Faserverbundwerkstoff benötigt werden. Gemäß besonders bevorzugter Ausführungsformen der Erfindung ist das Profilbauteil jedoch ein Spant oder ein Stringer für den Rumpf eines Luft- oder Wasserfahrzeugs, bzw. eine Blattfeder oder Querblattfeder insbesondere für das Fahrwerk eines Kraftfahrzeugs.

In allen diesen Anwendungsfällen werden Profilbauteile benötigt, an die einerseits sehr hohe Ansprüche bezüglich der Belastbarkeit bei gleichzeitig möglichst niedrigem Gewicht gestellt werden, und bei denen zudem ein variabler Verlauf der Krümmung und/oder der Querschnittsfläche über der Länge des Profilbauteils gefordert wird. Nicht zuletzt benötigen anspruchsvolle Profilbauteile wie Stringer, Spanten oder Blattfedern im allgemeinen besonders verstärkte (und ggf. mit Einlegeteilen versehenen) Stellen im Bauteil, an denen die Krafteinleitung bzw. die Verbindung mit Anschlussbauteilen erfolgen kann. Alle derartigen Anforderungen lassen sich durch das erfindungsgemäße Profilbauteil, durch die erfindungsgemäße Formkettenanlage bzw. durch das erfindungsgemäße Herstellungsverfahren erfüllen.

Im Folgenden wird die Erfindung anhand lediglich Ausführungsbeispiele darstellender Zeichnungen näher erläutert. Dabei zeigt:
- **Fig. 1**: in schematischer Darstellung eine Ausführungsform einer erfindungsgemäßen Formkettenanlage in der Draufsicht bzw. im Längsschnitt;
- **Fig. 2**: in vergrößerter isometrischer Darstellung einen Querschnitt durch den Bereich des Vorformbündels und der Arbeitstrums der Formketten bei einer Formkettenanlage ähnlich **Fig. 1****;**
- **Fig. 3**: in schematischer, vergrößerter Darstellung eine ausschnittsweise Seitenansicht einer Formkette bei einer Ausführungsform einer erfindungsgemäßen Formkettenanlage;
- **Fig. 4**: in einer **Fig. 3** entsprechenden Darstellung und Ansicht den Ausschnitt aus der Formkette gemäß **Fig. 3** bei vergrößertem Verlaufsradius der Formkette; und
- **Fig. 5**: in einer **Fig. 3** und 4 entsprechenden Darstellung ein Oberflächenglied der Formkette gemäß **Fig. 3** und **4** mit Darstellung des Hinterschnitts.

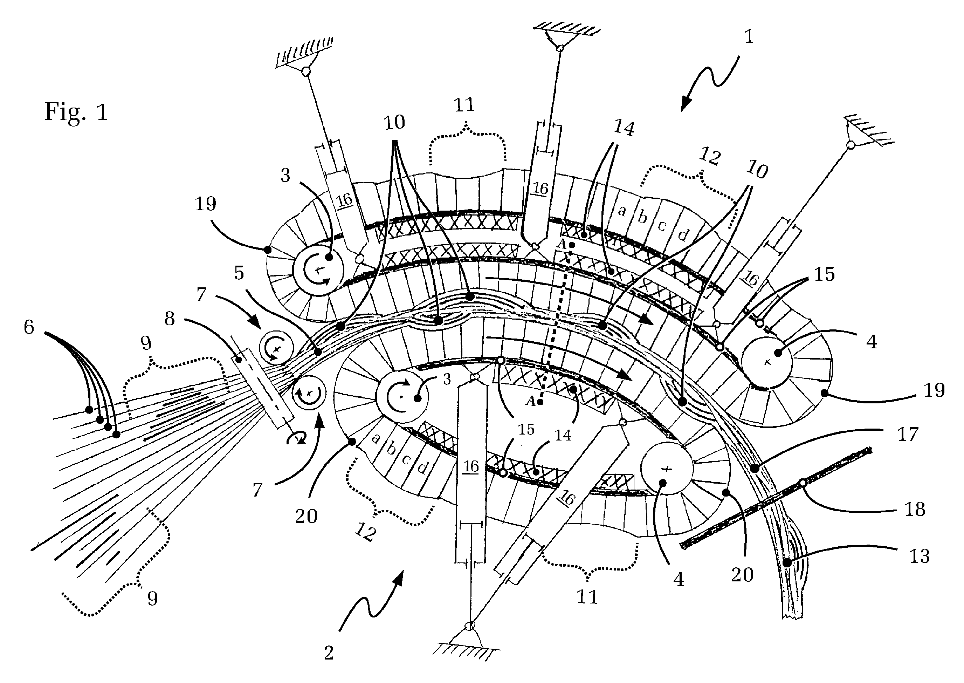

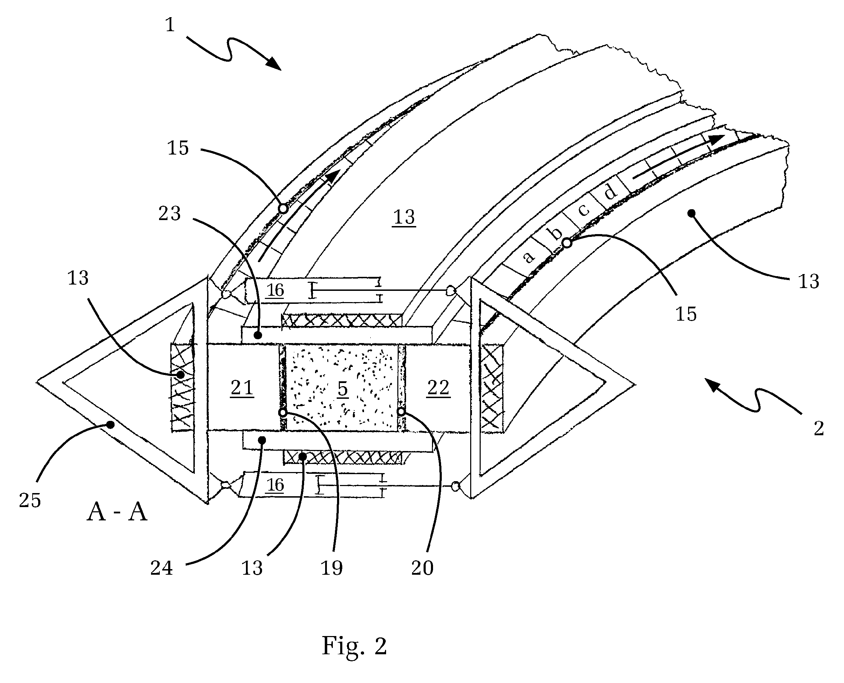

Die **Fig. 1** und **2** zeigen verschiedene Ansichten einer erfindungsgemäßen Formkettenanlage zur Herstellung des ebenfalls erfindungsgemäßen Faserverbundformteils, anhand des von der Erfindung ebenfalls umfassten erfindungsgemäßen Verfahrens.

In **Fig. 1** erkennt man zunächst einmal zwei umlaufend in der Formkettenanlage angeordnete Formketten 1, 2. Die Formketten 1, 2 sind bei der dargestellten Ausführungsform jeweils über ein Paar Umlenkwalzen 3, 4 geführt und ggf. mittels der Umlenkwalzen 3, 4 entlang der Durchlaufrichtung des Vorformbündels 5 angetrieben. Der Antrieb kann dabei insbesondere CNC-gesteuert erfolgen, um so für eine präzise Einhaltung der Vorschubgeschwindigkeit und weiterer damit verbundener Prozessvariablen wie insbesondere Matrixgehalt, Bauteilquerschnitt und Härtungsdauer zu sorgen.

Das Vorformbündel 5 wird bei der dargestellten Ausführungsform durch eine Anzahl von zugeführten Endlos-Fasersträngen 6, Endlos-Fasergeweben und/oder Endlos-Gestrick- bzw. Vliesbahnen 6 gebildet. Dies erfolgt durch Bündelung der zugeführten Grundstränge 6 bzw. Grundbahnen 6 mittels einer Walzenanordnung 7, 8 und deren anschließende Zuführung zum Eintritt zwischen den Formketten 1, 2. Vor der Bildung des Vorformbündels 5 können mittels einer (nicht abgebildeten) Handhabungseinrichtung zusätzliche Gewebe-, Gestrick- bzw. Vlies-Zuschnitte 9,

Prepreg-Zuschnitte 9 und/oder Krafteinleitungsbauteile 9 zwischen den zugeführten Grundsträngen oder Grundbahnen 6 angeordnet bzw. abgelegt und auf diese Weise - bei der Bündelung durch die Walzenanordnung 7, 8 - in das Vorformbündel 5 aufgenommen werden.

Die Ablage der Zuschnitte 9 bzw. Einlageteile 9 erfolgt dabei vorzugsweise so, dass die Zuschnitte 9 bzw. Einlageteile 9 von der Handhabungseinrichtung erst dann losgelassen werden, wenn die Zuschnitte 9 bzw. Einlageteile 9 von der Einzugs-Walzenanordnung 7, 8 erfasst worden sind, so dass die Zuschnitte 9 bzw. Einlageteile 9 nicht mehr verrutschen können.

Durch die zusätzlich in das Vorformbündel 5 aufgenommenen Zuschnitte 9 bzw. Einlageteile 9 ergeben sich üblicherweise lokale Querschnittsveränderungen bzw. Verdickungen 10 des Vorformbündels 5. Den Querschnittsveränderungen bzw. Verdickungen 10 wird durch die Formgebung der Formketten 1, 2 Rechnung getragen, indem die Kettenglieder a, b, c, d usw. der Formketten 1, 2 an ihrer Außenseite, also an ihrer dem Vorformbündel 5 zugewandten Seite, dementsprechend konturiert werden. Auf diese Weise ergeben sich entlang der Oberfläche des jeweiligen, dem Vorformbündel 5 zugewandten Arbeitstrums der Formketten 1, 2 entsprechende Vertiefungen 11 oder auch Erhebungen 12, beispielsweise im Bereich der Verdickungen 10 des Vorformbündels 5.

Dabei nehmen die Vertiefungen 11 in der Oberfläche der Formketten 1, 2 die Verdickungen 10 des Vorformbündels 5 auf und schließen diese während der Aushärtung des Vorformbündels 5 beim Durchlauf durch die Formkettenanlage somit kontrolliert ein. In ähnlicher Weise können auch Erhebungen 12 an der Oberfläche der Formketten 1, 2 vorgesehen sein, die etwaige Bereiche reduzierten Querschnitts des Vorformbündels 5 einschließen bzw. ausgleichen.

Die Erhebungen 12 und Vertiefungen 11 können entlang der Oberflächen der Formketten 1, 2 auch so angeordnet sein, dass eine Vertiefung 11 an der Oberfläche einer ersten Formkette 1 im Wesentlichen einer Erhebung 12 an der Oberfläche einer zweiten Formkette 2 entspricht oder umgekehrt. Auf diese Weise lassen sich insbesondere auch Profilbauteile 13 herstellen, die einen nahezu beliebig, auch variabel gekrümmten oder in sonstiger Weise geformten Verlauf der Profillängsachse aufweisen, indem das Vorformbündel 5 (beispielsweise mit unverändertem Querschnitt) so zwischen die Formketten 1, 2 mit entsprechenden Erhebungen 12 und Vertiefungen 11 eingeschlossen wird, dass sich der gewünschte Verlauf der Profillängsachse ergibt. Selbstverständlich ist auch eine Kombination aus einem weitgehend beliebigen Verlauf der Profillängsachse mit entsprechenden Verdickungen 10 an einem Profilbauteil 13 möglich. Auf ähnliche Weise können auch Profilbauteile 13 erzeugt werden, die einen über ihrer Länge beispielsweise kontinuierlich abnehmenden oder zunehmenden Querschnitt aufweisen, wie dies beispielsweise häufig bei Blattfedern, aber auch bei Verstärkungsbauteilen der Fall ist.

Im Hinblick auf die universelle Einsetzbarkeit der Formkettenanlage sind die Formketten 1, 2 jeweils als austauschbare Einheiten ausgebildet. Bei einer Umstellung der Produktion auf Profilbauteile 13 mit einem anderen Querschnittsverlauf werden die Formketten 1, 2 somit bezüglich ihrer Oberflächenkontur dementsprechend angepasst bzw. ausgetauscht. Ebenso können die Positionen und Abstände der Umlenkwalzen 3, 4 verändert werden, um die Anlage auf diese Weise an unterschiedliche Bauteilgrößen und Krümmungsradien anzupassen. Mit demselben Hintergrund kann im Bereich des rücklaufenden Trums der Formketten 1, 2 jeweils eine Kettenspanneinrichtung vorgesehen sein, um etwaige Differenzlängen der Formketten 1, 2 in Abhängigkeit der Positionierung der Umlenkwalzen 3, 4 bzw. in Abhängigkeit des eingestellten Krümmungsradius für das zu produzierende Profil 17 aufzunehmen und auszugleichen.

Auf welche Weise die Zufuhr des Matrixwerkstoffs zu den Strängen bzw. Bahnen 6 sowie zu den ggf. zusätzlich zugeführten Zuschnitten 9 konkret erfolgt, ist zunächst einmal unwesentlich für die Verwirklichung der Erfindung. So können die zugeführten Stränge bzw. Bahnen 6 (ebenso wie die ggf. zusätzlich zugeführte Zuschnitte 9) vorgetränkt sein, beispielsweise in Form von Prepreg-Bahnen oder -Rovings. Ebenso kann eine Tränkung der zugeführten Stränge bzw. Bahnen 6 (und ggf. auch der zusätzlich zugeführten Zuschnitte 9) beispielsweise in einem Bad mit flüssigem Matrixwerkstoff erfolgen, welches im Bereich der Zuführung der Stränge bzw. Bahnen 6, 9 angeordnet ist. Das Bad mit flüssigem Matrixwerkstoff kann auch in Arbeitsrichtung der Zuführung der Stränge bzw. Bahnen 6, 9 vorgelagert sein.

Im Hinblick auf eine einfache Tränkung der zugeführten Grundstränge bzw. Grundbahnen 6 - im Vorfeld der etwaigen Ein- bzw. Ablage zusätzlicher Gewebe-, Gestrick- bzw. Vlies-Zuschnitte, Prepreg-Zuschnitte 9 und/oder Krafteinleitungsbauteile 9 zwischen den Grundsträngen bzw. Grundbahnen 6 - kann es sinnvoll sein, die Grundstränge bzw. Grundbahnen 6 zunächst für sich genommen zusammenzuführen und durch das Bad mit flüssigem Matrixwerkstoff zu leiten. Anschließend können die so mit dem Matrixwerkstoff getränkten Grundstränge bzw. Grundbahnen 6 wieder aufgefächert werden, um bei 9 zusätzliche Gewebe-, Gestrick- bzw. Vlies-Zuschnitte, Prepreg-Zuschnitte 9 und/oder Krafteinleitungsbauteile 9 zwischen die Grundstränge bzw. Grundbahnen einlegen zu können.

Auch ist es möglich, den Matrixwerkstoff erst im Bereich der Walzenanordnung 7, 8, (bzw. in Durchlaufrichtung des Vorformbündels 5 nach dem Durchlaufen der Walzenanordnung 7, 8) in das Vorformbündel 5 einzubringen. Die Infiltration der Stränge bzw. Bahnen 6, 9 kann beispielsweise unmittelbar vor der Walzenanordnung 7, 8 mittels einer oder mehrerer Breitschlitzdüsen erfolgen, aus denen jeweils ein Strahl flüssigen Matrixwerkstoffs die noch nicht gänzlich gebündelten Stränge bzw. Bahnen 6, 9 durchtränkt. Überschüssiger Matrixwerkstoff wird unmittelbar im Anschluss daran durch die Walzenanordnung 7, 8 wieder ausgepresst und kann zur erneuten Verwendung rückgeführt werden.

Alternativ kann die Infiltration der Stränge bzw. Bahnen 6, 9 auch durch die Walzenanordnung 7, 8 selbst erfolgen dergestalt, dass die Walzen 7, 8 in einem Bad aus Matrixwerkstoff laufen, wodurch die Stränge bzw. Bahnen 6, 9 beim Durchlauf durch die Walzen 7, 8 mit dem Matrixwerkstoff durchwalkt werden. Überschüssiger Matrixwerkstoff kann in diesem Fall durch eine sich an die Walzenanordnung 7, 8 anschließende Abstreifvorrichtung (nicht dargestellt) abgestreift und zur erneuten Verwendung rückgeführt werden.

Eine weitere Variante für die Infiltration der Stränge bzw. Bahnen 6, 9 mit Matrixwerkstoff besteht in einem um das Vorformbündel 5 herum angeordneten Ringkanal, durch welchen der Matrixwerkstoff in das Vorformbündel 5 injiziert wird. Der Injektions-Ringkanal kann hierzu beispielsweise im Bereich zwischen der Walzenanordnung 7, 8 und dem Einzug des Vorformbündels 5 in die Formketten 1, 2 angeordnet sein.

In jedem Fall sorgt der längsseitige Einschluss des Vorformbündels 5 durch die Formketten 1, 2 dafür, dass überschüssiger Matrixwerkstoff beim Einlauf des Vorformbündels 5 zwischen die Formketten 1, 2 aus dem Vorformbündel 5 herausgepresst wird. Zur Beschleunigung der Aushärtung des Matrixwerkstoffs beim Durchlauf des Vorformbündels 5 durch die Formkettenanlage werden die Formketten 1, 2 beim dargestellten Ausführungsbeispiel mit Heizelementen 14 beheizt. Die Heizelemente 14 sind hier auf der Rückseite von Gleitführungen 15 angeordnet, mit denen das jeweilige Trum der Formkette 1, 2 geführt wird.

Die an den beiden Arbeitstrums der Formketten 1, 2 angeordneten Gleitführungen 15 werden beim dargestellten Ausführungsbeispiel der Formkettenanlage jeweils mittels einer Anpresseinrichtung mit hydraulischen oder pneumatischen Zylindern 16 in Richtung auf das Vorformbündel 5 gepresst. Auf diese Weise lässt sich - im Unterschied zu den aus dem Stand der Technik bekannten Pultrusionsverfahren - das bei hochbelastbaren Profilbauteilen 13 üblicherweise gewünschte hohe Verstärkungs/Matrix-Volumenverhältnis bzw. Gewichtsverhältnis einstellen und reproduzierbar kontrollieren, ebenso wie sich hierdurch eine besonders innige Infiltration der Verstärkungsfasern mit dem Matrixwerkstoff und damit mechanisch besonders hochwertige Bauteile erhalten lassen. Auch werden auf diese Weise unerwünschte Lufteinschlüsse im Matrixwerkstoff des Endlosprofils 17 bzw. des fertigen Profilbauteils 13 noch vor dem Aushärten des Matrixwerkstoffs ausgestoßen und damit unterbunden.

Durch geeignete Ansteuerung der Zylinder 16 kann der Radius des Verlaufs der Gleitführungen 15 bei der dargestellten Ausführungsform variabel eingestellt werden, so dass Endlosprofile 17 bzw. Profilbauteile 13 mit den unterschiedlichsten Krümmungsradien - bis hin zu insgesamt geraden Profilbauteilen 13 - hergestellt werden können.

Im Hinblick auf eine hohe Steifigkeit der gesamten Anlage können die Gleitführungen 15 insbesondere direkt auf dem oder im Fabrikationsfußboden gelagert und unterstützt sein.

Nach dem Aushärten des Vorformbündels 5 und dem Ausstoß des ausgehärteten Vorformbündels 5 bzw. des auf diese Weise gebildeten Endlosprofils 17 wird das Endlosprofil 17 durch eine geeignete Trenneinrichtung 18 abgelängt, beispielsweise durch eine in Bewegungsrichtung des Endlosprofils 17 mitlaufende Kreissäge 18, wodurch das Profilbauteil 13 erhalten wird.

In **Fig. 1** ebenfalls erkennbar sind die biegeelastischen Bänder 19, 20, die bei der dargestellten Ausführungsform auf der Außenoberfläche der Kettenglieder a, b, c, d usw. angeordnet sind und zusammen mit der jeweiligen Formkette 1, 2 umlaufen. Die biegeelastischen Bänder 19, 20, die beispielsweise in Form von Federstahlbändern vorliegen können, trennen die Oberfläche der Formketten 1, 2 von dem noch flüssigen Matrixwerkstoff des Vorformbündels 5, und sorgen gleichzeitig für eine gleichmäßig glatte (oder im Fall von profilierten bzw. gemusterten Bandoberflächen auch für profilierte bzw. gemusterte) Oberflächen am fertigen Profilbauteil 13.

**Fig. 2** zeigt in isometrischer Darstellung einen Querschnitt durch die Arbeitstrums 21, 22 der Formketten 1, 2 entlang der in **Fig. 1** eingezeichneten Schnittlinie A - A, mit Blick entlang der Durchlaufrichtung des Vorformbündels 5 durch die Formkettenanlage. In **Fig. 2** wird zunächst einmal erkennbar, dass das Vorformbündel 5 - außer durch die beiden Formketten 1, 2 - an seinen beiden weiteren Längsseiten durch Form- bzw. Führungsplatten 23, 24 eingeschlossen wird. Die Führungsplatten 23, 24 sind ebenso wie Formketten 1, 2 rückseitig mit Heizelementen 14 versehen, um so die Aushärtung des Matrixwerkstoffs im Vorformbündel 5 zu beschleunigen.

Man erkennt, dass das Vorformbündel 5 auf diese Weise durch die beiden Arbeitstrums 21, 22 der Formketten 1, 2 sowie durch die Führungsplatten 23, 24 längsseits allseitig eingeschlossen wird, wodurch sich eine wirksame und reproduzierbare Kontrolle der Formgebung und des Verstärkungs/Matrix-Verhältnisses für das Vorformbündel 5 und damit auch für das Profilbauteil 13 gewährleisten lässt.

Zwischen den beiden Arbeitstrums 21, 22 der Formketten 1, 2 und dem Vorformbündel 5 ist zudem jeweils ein biegeelastisches Band 19, 20 angeordnet, das für eine gleichmäßig glatte Oberfläche der den Arbeitstrums 21, 23 der Formketten 1, 2 zugewandten Längsseiten des Vorformbündels 5 und damit auch des Profilbauteils 13 sorgt. Auch verhindern die biegeelastischen Bänder 19, 20 ein Anhaften von noch flüssigem Matrixwerkstoff an der Oberfläche der Formketten, bzw. ein Eindringen des noch flüssigen Matrixwerkstoffs zwischen die Kettenglieder a, b, c, d der Formketten 1, 2 im Bereich der Arbeitstrums 21, 23.

Bei der Querschnittsdarstellung gemäß **Fig. 2** ist die Anpresseinrichtung mit den Zylindern 16 im Detail unterschiedlich zu der Anpresseinrichtung gemäß **Fig. 1** ausgeführt, um auf diese Weise unterschiedliche Möglichkeiten der konstruktiven Ausführung für die Anpresseinrichtung zu deutlichen. Bei der Anpresseinrichtung gemäß **Fig. 2** sind die Zylinder 16 an entsprechenden Hilfsrahmen 25 so angeordnet, dass die Zylinder 16 unmittelbar zwischen den beiden Gleitführungen 15 wirken. Auf diese Weise lassen sich die Gleitführungen 15 und damit auch die Arbeitstrums 21, 22 somit wieder kontrolliert gegeneinander pressen, um reproduzierbar eine hohe Qualität und Maßhaltigkeit des zu erzeugenden Profilbauteils gewährleisten zu können.

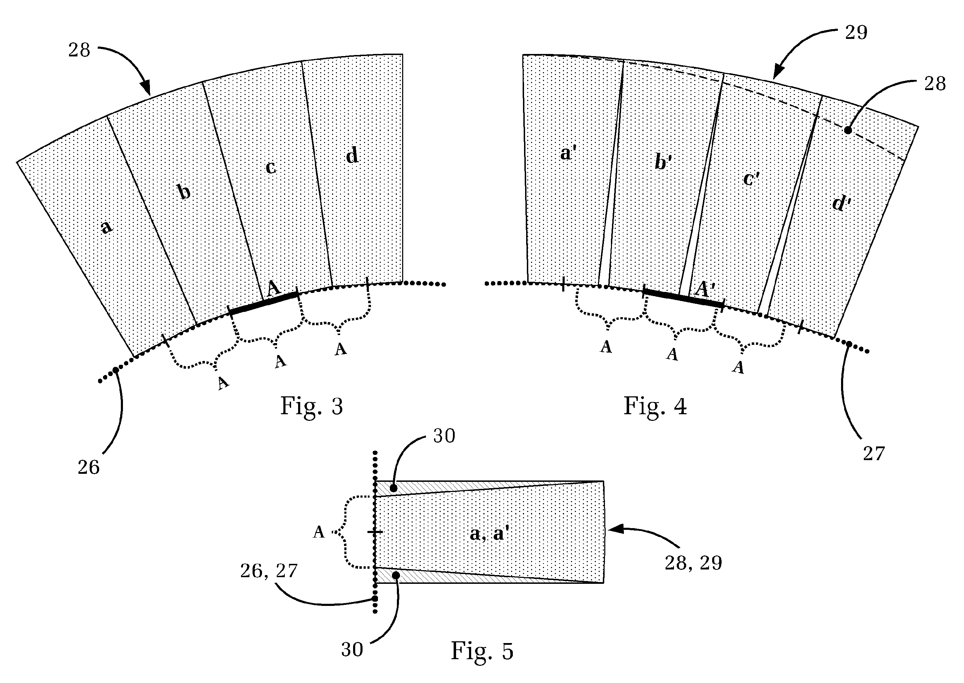

In den **Fig. 3** bis **5** wird anhand schematischer Darstellungen verdeutlicht, auf welche Weise der Verlauf des Arbeitstrums der Formkette einer erfindungsgemäßen Formkettenanlage entlang unterschiedlich großer Krümmungsradien erfolgen kann, wobei gleichzeitig eine geschlossene Oberfläche der Formkette im Bereich der Anlage am Vorformbündel 5 erhalten bleibt.

**Fig. 3** zeigt hierzu schematisch zunächst einen Ausschnitt aus dem Arbeitstrum einer Formkette, wobei das Arbeitstrum ähnlich wie in **Fig. 1** und **2** einen gekrümmten Verlauf aufweist, um auf diese Weise Profilbauteile 13 mit einer gleichförmigen Grundkrümmung der Profillängsachse herzustellen. Die Formkette besteht bei der Ausführungsform gemäß **Fig. 3** bis **5** aus einer lediglich schematisch angedeuteten Grundkette 26 bzw. 27, auf der Oberflächenglieder a, b, c, d usw. angeordnet sind. Die Grundkette 26 verläuft beim Beispiel gemäß **Fig. 3** entlang eines relativ kleinen Krümmungsradius, um auf diese Weise Profilbauteile mit einer der Kettenoberfläche bei 28 entsprechenden Krümmung herzustellen.

Soll die Formkettenanlage nun umgestellt werden, um Profilbauteile mit einer anderen Krümmung, beispielsweise mit einem größeren Krümmungsradius herzustellen, so ergibt sich nach der Umstellung der Formkettenanlage das Bild gemäß **Fig. 4****.** Man erkennt, dass der Verlauf der Grundkette 27 einem im Vergleich zur Situation gemäß **Fig. 3** größeren Krümmungsradius folgt. Dementsprechend bilden auch die kopfseitigen Oberflächen der Oberflächenglieder a', b', c', d' bei 29 einen entsprechend vergrößerten Krümmungsradius, und es ergibt sich eine entsprechende Formgebung des im Kopfbereich 29 der Oberflächenglieder a', b', c', d' anliegenden Vorformbündels (hier nicht dargestellt). Zum Vergleich ist in **Fig. 4** der kleinere Krümmungsradius der Oberfläche 28 beim Verlauf der Formkette gemäß **Fig. 3** strichliert eingezeichnet.

Da für eine möglichst glatte Formgebung der Oberfläche des Vorformbündels ein dementsprechend glatter Verlauf der kopfseitigen Oberfläche der Formkette bei 29 erforderlich ist, müssen die Kopfbereiche 28, 29 der Oberflächenglieder a, b, c, d bzw. a', b', c', d' in jedem Fall unmittelbar aneinander anliegen. Auf diese Weise wird auch vermieden, dass der noch flüssige Matrixwerkstoff zwischen die Glieder der Formkette eindringen kann.

Aus diesem Grund ist es jedoch bei unterschiedlichen Krümmungsradien der Formkette, wie sie in den **Fig. 3** und **4** gegenübergestellt sind, erforderlich, dass die Fußbereiche der Oberflächenglieder a, b, c, d bzw. a', b', c', d' in Abhängigkeit vom Krümmungsradius im Bereich der Grundkette 26, 27 unterschiedliche Abstände A bzw. A' aufweisen. Man erkennt, dass die Befestigungsabstände A' der Oberflächenglieder a', b', c', d' auf der Grundkette 27 bei einem größeren Radius des Kettenverlaufs gemäß **Fig. 4** größer sein müssen als die Befestigungsabstände A der Oberflächenglieder a, b, c, d bei einem kleineren Radius des Kettenverlaufs gemäß **Fig. 3****.**

Um somit nicht bei jeder Änderung des Krümmungsradius der Formkette die Oberflächenglieder a', b', c', d' neu justieren bzw. im passenden Abstand A' neu auf der Grundkette 27 anordnen zu müssen, sind die Oberflächenglieder a, b, c, d bzw. a', b', c', d' bei der in den **Fig. 3** bis **5** dargestellten Ausführungsform in Längsrichtung der Kette schwimmend auf der Grundkette 26, 27 angeordnet. Auf diese Weise ergibt sich die Möglichkeit für die Oberflächenglieder a, b, c, d bzw. a', b', c', d', die Abstände ihrer Fußpunkte auf der Grundkette 26, 27 selbsttätig so einzuregulieren, dass ihre Oberflächen in ihren Kopfbereichen 28, 29 ohne Spaltöffnungen zwischen den Oberflächengliedern unmittelbar aneinander anschließen.

Bei einer Vergrößerung des Krümmungsradius des Arbeitstrums der Formkette (wie im Beispiel der **Fig. 4** gegenüber dem kleineren Krümmungsradius gemäß **Fig. 3** der Fall) vergrößern sich somit die Abstände A' der Fußpunkte der

Oberflächenglieder a', b', c', d', während die Kopfbereiche der Oberflächenglieder a', b', c', d' bei 29 unverändert direkt aneinander anschließen. Mit anderen Worten bedeutet dies, dass die Oberflächenglieder a', b', c', d' bei einer Vergrößerung des Krümmungsradius im Arbeitstrum der Formkette tendenziell aus dem Bereich des Arbeitstrums verdrängt werden, was eine Aufnahme der aus dem Bereich des Arbeitstrums verdrängten Oberflächenglieder a', b', c', d' im Bereich des rücklaufenden Leertrums der Formkette notwendig macht.

Dies lässt sich beispielsweise dadurch bewerkstelligen, dass bei einer Vergrößerung des Krümmungsradius im Arbeitstrum der Formkette eine dementsprechende Verkleinerung im Krümmungsradius des Leertrums der Formkette erfolgt (wodurch die Oberflächenglieder im Bereich des Leertrums näher zusammenrücken und somit die aus dem Arbeitstrum verdrängten Oberflächenglieder aufnehmen können). Ähnliches gilt im umgekehrten Fall, indem bei einer Verkleinerung des Krümmungsradius im Arbeitstrum der Formkette eine entsprechende Vergrößerung des Krümmungsradius im Leertrum der Formkette erfolgt, so dass Oberflächenglieder tendenziell aus dem Leertrum verdrängt und entsprechend ihrer verringerten Abstände im Arbeitstrum in das Arbeitstrum aufgenommen werden können.

Die Verrundung der Kopfbereiche 28, 29 der Oberflächenglieder a, b, c, d bzw. a', b', c', d' wird dabei so vorgenommen, dass sich bei einem mittleren Radius aus dem Bereich der möglichen Krümmungsradien des Arbeitstrums der Formkette eine vollkommen glatte Oberfläche 28 ergibt. Mit dieser Ausgestaltung der Verrundung der Kopfbereiche 28, 29 der Oberflächenglieder ergeben sich lediglich minimale Abweichungen der Oberfläche 29 der Formkette von der idealen glatten Form, wenn andere Krümmungsradien als der mittlere bzw. bevorzugte Krümmungsradius gewählt werden.

**Fig. 5** schließlich zeigt nochmals eines der Oberflächenglieder a, b, c, d bzw. a', b', c', d', wobei in **Fig. 5** die Hinterschneidungen 30 visualisiert sind, die erforderlich sind, um mit der Formkette auch konvexe Krümmungen realisieren zu können, wie dies in den **Fig. 3** und 4, ebenso wie bei der Formkette 2 gemäß **Fig. 1** und **2** der Fall ist.

Die dargestellte Materialwegnahme in den Hinterschneidungsbereichen 30 der Oberflächenglieder a, b, c, d bzw. a', b', c', d' ermöglicht, dass die Fußbereiche der Oberflächenglieder (im Bereich der Grundkette bei 26, 27) näher zusammenrücken können als die Kopfbereiche (im Oberflächenbereich der Formkette bei 28, 29), was Voraussetzung für eine konvexe Krümmung der Formkette ist. Der minimale Abstand der Fußbereiche der Oberflächenglieder bei 26, 27 entspricht dabei der Fußbreite A des einzelnen Oberflächenglieds, was bei dem Krümmungsradius der Formkette gemäß **Fig. 3** der Fall ist.

Im Ergebnis wird demnach deutlich, dass sich dank der Erfindung auch anspruchsvollste Faserverbundprofilbauteile erstmalig mit hoher, reproduzierbarer Qualität im kontinuierlichen Durchlaufverfahren herstellen lassen, wobei praktisch sämtliche Nachteile der aus dem Stand der Technik bekannten Herstellungsverfahren überwunden werden. Insbesondere lassen sich dank der Erfindung auf diese Weise auch Profile mit veränderlichem Querschnitt und/oder mit nahezu beliebig verlaufender Profillängsachse herstellen. Gleichzeitig können die Profile bereits bei der Urformung mit lokalen Verstärkungen, Aufdickungen, Anbauteilen oder Inserts insbesondere zur Krafteinleitung versehen werden. Nacharbeit oder die aufwändige und bezüglich der Stabilität problematische, nachträgliche Anbringung insbesondere von Krafteinleitungselementen kann somit praktisch vollständig entfallen.

Die Erfindung leistet damit einen als fundamental zu bezeichnenden Beitrag zur Weiterbildung kostengünstiger, reproduzierbarer und skalierbarer Produktionsmöglichkeiten für anspruchsvolle Faserverbundbauteile, insbesondere für den Fahrzeugbau zu Lande, zu Wasser und in der Luft.

### Bezugszeichenliste

- 1, 2: Formkette
- 3, 4: Umlenkwalze
- 5: Vorformbündel
- 6: Faserstränge, Fasergewebebahnen, Gestrickbahnen, Vliesbahnen
- 7, 8: Walzenanordnung
- 9: Einlegeteile
- 10: Verdickung, Verstärkung
- 11: Vertiefung der Formkettenoberfläche
- 12: Erhebung der Formkettenoberfläche
- 13: Profilbauteil
- 14: Heizung
- 15: Gleitführung
- 16: Hubzylinder
- 17: Endlosprofil
- 18: Trenneinrichtung
- 19, 20: biegeelastisches Band
- 21, 22: Arbeitstrum
- 23, 24: Führungsplatte
- 2 5: Hilfsrahmen
- 26, 27: Grundkette
- 28, 2 9: Kettenoberfläche, Kopfbereich
- 30: Hinterschneidung

## Patentansprüche

1. Verfahren zur kontinuierlichen Herstellung von Profilbauteilen aus Faserverbundwerkstoff mittels einer Formkettenanlage, der Faserverbundwerkstoff umfassend einen Matrixwerkstoff und eine Verstärkungsfaseranordnung (6), mit folgenden Verfahrensschritten:
a. Zuführung von Endlos-Fasersträngen und/oder Endlos-Fasergewebe-, Gestrick- bzw. Vliesbahnen (6);
b. Zusammenführung (7, 8) der Stränge und/oder Bahnen zu einem Endlos-Vorformbündel (5);
c. Anlage des Vorformbündels (5) an einem Arbeitstrum (21, 22) zumindest einer umlaufenden Formkette (1, 2) der Formkettenanlage;
d. Führung des Vorformbündels (5) mittels des Arbeitstrums (21, 22) der zumindest einen Formkette (1, 2) durch die Formkettenanlage unter Bildung eines Endlosprofils (17) durch Härtung des Matrixwerkstoffs;
e. Ausstoß des Endlosprofils (17) aus der Formkettenanlage;
f. Ablängung des Endlosprofils (17) zum Profilbauteil (13);
wobei die Stränge bzw. Bahnen (6) mit dem Matrixwerkstoff vorgetränkt sind und/oder während eines der Verfahrensschritte a), b) oder c) mit Matrixwerkstoff getränkt werden, wobei das Arbeitstrum (21, 22) der zumindest einen Formkette (1, 2) entlang einer Gleitführung (15) auf der dem Vorformbündel (5) abgewandten Seite des Arbeitstrums (21, 22) gleitend geführt ist, und wobei die Außenoberfläche der Formkette (1, 2) durch Oberflächenglieder (a, b, c, d) gebildet ist,
**dadurch gekennzeichnet, dass** die Formketten-Gleitführung (15) zumindest eine Krümmung aufweist, wobei der Krümmungsradius der Formketten-Gleitführung (15) variabel einstellbar ist, und wobei das Profilbauteil im Verfahrensschritt d) anhand der Krümmung der Formketten-Gleitführung (15) und/oder anhand von Vertiefungen (11) und/oder Erhebungen (12) in der Formketten-Oberfläche, die sich entlang der Kettenlängsrichtung über mehrere Oberflächenglieder (a, b, c, d) erstrecken, einen im Wesentlichen beliebig wählbaren Verlauf hinsichtlich seiner Längsachse, hinsichtlich seiner Querschnittsform und/oder hinsichtlich seiner Längsoberfläche erhält.

2. Verfahren nach Anspruch 1,
**dadurch gekennzeichnet,**
**dass** Anlage und Führung des Vorformbündels (5) im Verfahrensschritt c) am Arbeitstrum (21, 22) zweier Formketten (1, 2) einer Formkettenanlage erfolgt.

3. Verfahren nach Anspruch 1 oder 2,
**dadurch gekennzeichnet,**
**dass** im Verfahrensschritt c) Anlage und Führung des Vorformbündels (5) zusätzlich an zumindest einer Führungsplatte (23, 24) erfolgt, wobei das Arbeitstrum (21, 22) der zumindest einen Formkette (1, 2) und die zumindest eine Führungsplatte (23, 24) das Vorformbündel (5) längsseits allseitig einschließen.

4. Verfahren nach Anspruch 2 oder 3,
**dadurch gekennzeichnet,**
**dass** im Verfahrensschritt c) die einander bezüglich des Arbeitswegs des Vorformbündels (5) gegenüber angeordneten Formketten (1, 2) und/oder Führungsplatten mittels einer Vorspanneinrichtung gegeneinander gepresst werden.

5. Verfahren nach Anspruch 2 oder 3,
**dadurch gekennzeichnet,**
**dass** das Arbeitstrum (21, 22) der zumindest einen Formkette (1, 2) und/oder die zumindest eine Führungsplatte (23, 24) zur Beschleunigung der Härtung des Matrixwerkstoffs beheizt werden.

6. Verfahren nach einem der Ansprüche 1 bis 5,
**dadurch gekennzeichnet,**
**dass** in einem weiteren Verfahrensschritt a') zwischen bzw. auf den zugeführten Strängen (6), Geweben, Gestricken bzw. Vliesen (6) zumindest ein Einlageteil (9) positioniert, in der Folge in das Vorformbündel (5) eingebunden und in das Endlosprofil (17) einlaminiert wird.

7. Verfahren nach Anspruch 6,
**dadurch gekennzeichnet,**
**dass** das zumindest eine Einlageteil (9) zumindest einen flächigen Prepreg-Zuschnitt (9) umfasst.

8. Verfahren nach Anspruch 6 oder 7,
**dadurch gekennzeichnet,**
**dass** das zumindest eine Einlageteil (9) zumindest einen Gewebe-, Gestrick- bzw. Vlies-Zuschnitt (9) umfasst.

9. Verfahren nach einem der Ansprüche 6 bis 8,
**dadurch gekennzeichnet,**
**dass** das zumindest eine Einlageteil ein Krafteinleitungsbauteil (9) ist.

10. Verfahren nach einem der Ansprüche 1 bis 9,
**dadurch gekennzeichnet,**
**dass** im Verfahrensschritt c) ein biegeelastisches Band (19, 20) zwischen dem Vorformbündel (5) und der zumindest einen Formkette (1, 2) bzw. zwischen dem Vorformbündel (5) und der zumindest einen Führungsplatte (23, 24) mitgeführt wird.

11. Formkettenanlage zur kontinuierlichen Herstellung von Faserverbundwerkstoff-Profilbauteilen aus einem Endlos-Vorformbündel (5), das Vorformbündel (5) umfassend eine mit einem Matrixwerkstoff getränkte Verstärkungsfaseranordnung, die Formkettenanlage umfassend zumindest eine erste, endlos umlaufende Formkette (1, 2) mit einem dem Arbeitsweg des Vorformbündels (5) zugewandten Arbeitstrum (21, 22) zur Führung und Kompression des Vorformbündels (5) während der Härtung des Matrixwerkstoffs, wobei das Arbeitstrum (21, 22) der zumindest einen Formkette (1, 2) entlang einer Gleitführung (15) auf der dem Vorformbündel (5) abgewandten Seite des Arbeitstrums (21, 22) gleitend geführt ist, und wobei die Außenoberfläche der Formkette (1, 2) durch Oberflächenglieder (a, b, c, d) gebildet ist,
**dadurch gekennzeichnet,**
**dass** die Formketten-Gleitführung (15) zumindest eine Krümmung aufweist, wobei der Krümmungsradius der Formketten-Gleitführung (15) variabel einstellbar ist, und wobei die Oberfläche des Arbeitstrums (21, 22) der zumindest einen Formkette (1, 2) anhand der Krümmung der Formketten-Gleitführung (15) und/oder anhand von Vertiefungen (11) und/oder Erhebungen (12) in der Formketten-Oberfläche, die sich entlang der Kettenlängsrichtung über mehrere Oberflächenglieder (a, b, c, d) erstrecken, einen im Wesentlichen beliebig variablen Verlauf hinsichtlich der Längsachse des Profilbauteils, hinsichtlich der Querschnittsform des Profilbauteils und/oder hinsichtlich der Längsoberfläche des Profilbauteils aufweist.

12. Formkettenanlage nach Anspruch 11,
**dadurch gekennzeichnet,**
**dass** die Gleitführung (15) entlang des Wegs des Arbeitstrums (21, 22) der Formkette (1, 2) einen Radius beschreibt.

13. Formkettenanlage nach Anspruch 11 oder 12,
**dadurch gekennzeichnet,**
**dass** die Oberflächenglieder (a, b, c, d) relativ zueinander jeweils zumindest geringfügig entlang der Kettenlängsrichtung bewegbar sind.

14. Formkettenanlage nach Anspruch 13,
**dadurch gekennzeichnet,**
**dass** die Oberflächenglieder (a, b, c, d) ausgehend von ihrer Oberfläche (28, den 29) in Richtung auf ihren Fußbereich einen Hinterschnitt (30) aufweisen.

15. Formkettenanlage nach einem der Ansprüche 11 bis 14,
**gekennzeichnet durch**
eine bezüglich des Arbeitswegs des Vorformbündels (5) jenseits der ersten Formkette (1) angeordnete Führungsplatte (23, 24).

16. Formkettenanlage nach einem der Ansprüche 11 bis 15,
**gekennzeichnet durch**
eine bezüglich des Arbeitswegs des Vorformbündels (5) jenseits der ersten Formkette (1) angeordnete weitere Formkette (2).

17. Formkettenanlage nach einem der Ansprüche 11 bis 16,
**gekennzeichnet durch**
zumindest eine entlang des Arbeitswegs des Vorformbündels (5) im rechten Winkel zu der zumindest einen Formkette (1, 2) angeordnete Führungsplatte (23, 24).

18. Formkettenanlage nach einem der Ansprüche 15 bis 17,
**dadurch gekennzeichnet,**
**dass** einander - bezüglich des Arbeitswegs des Vorformbündels (5) - gegenüber angeordnete Formketten (1, 2) und/oder Führungsplatten (23, 24) mittels einer Vorspanneinrichtung (16, 25) gegeneinander pressbar sind.

19. Formkettenanlage nach einem der Ansprüche 11 bis 18,
**dadurch gekennzeichnet,**
**dass** die Formkette (1, 2) auf der dem Vorformbündel (5) zugewandten Seite eine im Wesentlichen glatte, im Wesentlichen geschlossene Kettenoberfläche (28, 29) bildet.

20. Formkettenanlage nach einem der Ansprüche 11 bis 19,
**dadurch gekennzeichnet,**
**dass** zwischen dem Arbeitstrum der Formkette (1, 2) und dem Arbeitsweg des Vorformbündels (5) ein biegeelastisches Band (19, 20) angeordnet ist.

21. Formkettenanlage nach Anspruch 20,
**dadurch gekennzeichnet,**
**dass** das biegeelastische Band (19, 20) entlang der Außenseite der Formkette (1, 2) angeordnet ist und zusammen mit der Formkette (1, 2) umläuft.

22. Formkettenanlage nach Anspruch 20,
**dadurch gekennzeichnet,**
**dass** das biegeelastische Band (19, 20) dem Arbeitsweg des Vorformbündels (5) zusammen mit den Fasersträngen (6) und/oder Gewebe-, Gestrick- bzw. Vliesbahnen (6) zugeführt wird.

23. Formkettenanlage nach Anspruch 21,
**dadurch gekennzeichnet,**
**dass** das biegeelastische Band (19, 20) dem Arbeitsweg des Vorformbündels (5) zusammen mit den Fasersträngen (6) und/oder Gewebe-, Gestrick- bzw. Vliesbahnen (6) zugeführt wird.

24. Formkettenanlage nach einem der Ansprüche 21 bis 23,
**dadurch gekennzeichnet,**
**dass** die dem Vorformbündel (5) zugewandte Oberfläche des biegeelastischen Bandes (19, 20) oder die dem Vorformbündel (5) zugewandte Oberfläche (28, 29) der Formkette (1, 2) ein nicht glattes Oberflächenprofil aufweist.

25. Formkettenanlage nach einem der Ansprüche 11 bis 24,
**gekennzeichnet durch**
eine Einrichtung zur Zuführung von Einlageteilen (9) oder Verstärkungslagen (9), beispielsweise Gewebe-, Gestrick- bzw. Vlies-Zuschnitte, Prepreg-Zuschnitte und/oder Krafteinleitungsbauteile, und zur Positionierung der Einlageteile (9) bzw. Verstärkungslagen (9) im oder auf dem Vorformbündel (5).

## Claims

1. Method for the continuous production of profiled components from fibre-composite material by means of a moulding-chain installation, the fibre-composite material comprising a matrix material and an arrangement of reinforcement fibres (6), having the following method steps of:
a. feeding endless rovings and/or endless woven-fabric, knitted-fabric or nonwoven webs (6);
b. combining (7, 8) the rovings and/or webs to form an endless preform bundle (5);
c. placing the preform bundle (5) against a working strand (21, 22) of at least one circulating moulding chain (1, 2) of the moulding-chain installation;
d. guiding the preform bundle (5) through the moulding-chain installation by means of the working strand (21, 22) of the at least one moulding chain (1, 2), with an endless profile (17) being formed by curing of the matrix material;
e. ejecting the endless profile (17) from the moulding-chain installation;
f. cutting the endless profile (17) to length to form the profiled component (13);
wherein the rovings or webs (6) are preimpregnated with the matrix material and/or are impregnated with a matrix material during one of method steps a), b) and c), wherein the working strand (21, 22) of the at least one moulding chain (1, 2) is guided in a sliding manner along a sliding guide (15) on that side of the working strand (21, 22) that faces away from the preform bundle (5), and wherein the outer surface of the moulding chain (1, 2) is formed by surface members (a, b, c, d), **characterized in that** the moulding-chain sliding guide (15) has at least one curvature, wherein the radius of curvature of the moulding-chain sliding guide (15) is settable in a variable manner, and wherein the profiled component receives, in method step d), a profile that is selectable substantially as desired in terms of its longitudinal axis, in terms of its cross-sectional shape and/or in terms of its longitudinal surface, by way of the curvature of the moulding-chain sliding guide (15) and/or by way of depressions (11) and/or elevations (12) in/on the moulding-chain surface, which extend in the chain longitudinal direction over several surface members (a, b, c, d).

2. Method according to Claim 1,
**characterized**
**in that** the placing and guiding of the preform bundle (5) in method step c) takes place against the working strand (21, 22) of two moulding chains (1, 2) of a moulding-chain installation.

3. Method according to Claim 1 or 2,
**characterized**
**in that**, in method step c), the placing and guiding of the preform bundle (5) additionally takes place against at least one guide plate (23, 24), wherein the working strand (21, 22) of the at least one moulding chain (1, 2) and the at least one guide plate (23, 24) enclose the preform bundle (5) lengthwise on all sides.

4. Method according to Claim 2 or 3,
**characterized**
**in that**, in method step c), the guide plates and/or moulding chains (1, 2) that are arranged opposite one another with regard to the working path of the preform bundle (5) are pressed against one another by means of a preloading device.

5. Method according to Claim 2 or 3,
**characterized**
**in that** the working strand (21, 22) of the at least one moulding chain (1, 2) and/or the at least one guide plate (23, 24) are heated in order to accelerate the curing of the matrix material.

6. Method according to one of Claims 1 to 5,
**characterized**
**in that**, in a further method step a'), at least one inlay part (9) is positioned between or on the fed rovings (6), woven fabrics, knitted fabrics or nonwovens (6), subsequently incorporated into the preform bundle (5) and laminated into the endless profile (17).

7. Method according to Claim 6,
**characterized**
**in that** the at least one inlay part (9) comprises at least one extensive prepreg blank (9).

8. Method according to Claim 6 or 7,
**characterized**
**in that** the at least one inlay part (9) comprises at least one woven-fabric, knitted-fabric or nonwoven blank (9).

9. Method according to one of Claims 6 to 8,
**characterized**
**in that** the at least one inlay part is a force transmission component (9).

10. Method according to one of Claims 1 to 9,
**characterized**
**in that**, in method step c), a flexible strip (19, 20) is guided along between the preform bundle (5) and the at least one moulding chain (1, 2) or between the preform bundle (5) and the at least one guide plate (23, 24).

11. Moulding-chain installation for the continuous production of fibre-composite material profiled components from an endless preform bundle (5), the preform bundle (5) comprising an arrangement of reinforcement fibres impregnated with a matrix material, the moulding-chain installation comprising at least one first, endlessly circulating moulding chain (1, 2) having a working strand (21, 22), facing the working path of the preform bundle (5), for guiding and compressing the preform bundle (5) during the curing of the matrix material, wherein the working strand (21, 22) of the at least one moulding chain (1, 2) is guided in a sliding manner along a sliding guide (15) on that side of the working strand (21, 22) that faces away from the preform bundle (5), and wherein the outer surface of the moulding chain (1, 2) is formed by surface members (a, b, c, d),
**characterized**
**in that** the moulding-chain sliding guide (15) has at least one curvature, wherein the radius of curvature of the moulding-chain sliding guide (15) is settable in a variable manner, and wherein the surface of the working strand (21, 22) of the at least one moulding chain (1, 2) has a profile that is variable substantially as desired in terms of the longitudinal axis of the profiled component, in terms of the cross-sectional shape of the profiled component and/or in terms of the longitudinal surface of the profiled component, by way of the curvature of the moulding-chain sliding guide (15) and/or by way of depressions (11) and/or elevations (12) in/on the moulding-chain surface, which extend in the chain longitudinal direction over several surface members (a, b, c, d).

12. Moulding-chain installation according to Claim 11,
**characterized**
**in that** the sliding guide (15) describes a radius along the path of the working strand (21, 22) of the moulding chain (1, 2).

13. Moulding-chain installation according to Claim 11 or 12,
**characterized**
**in that** the surface members (a, b, c, d) are each movable at least slightly in the chain longitudinal direction relative to one another.

14. Moulding-chain installation according to Claim 13,
**characterized**
**in that** the surface members (a, b, c, d) have an undercut (30) starting from their surface (28, the 29) in the direction of their foot region.

15. Moulding-chain installation according to one of Claims 11 to 14,
**characterized by**
a guide plate (23, 24) that is arranged beyond the first moulding chain (1) with regard to the working path of the preform bundle (5).

16. Moulding-chain installation according to one of Claims 11 to 15,
**characterized by**
a further moulding chain (2) that is arranged beyond the first moulding chain (1) with regard to the working path of the preform bundle (5).

17. Moulding-chain installation according to one of Claims 11 to 16,
**characterized by**
at least one guide plate (23, 24) that is arranged at right angles to the at least one moulding chain (1, 2) along the working path of the preform bundle (5).

18. Moulding-chain installation according to one of Claims 15 to 17,
**characterized**
**in that** guide plates (23, 24) and/or moulding chains (1, 2) that are arranged opposite one another - with regard to the working path of the preform bundle (5) - are able to be pressed against one another by means of a preloading device (16, 25).

19. Moulding-chain installation according to one of Claims 11 to 18,
**characterized**
**in that** the moulding chain (1, 2) forms, on the side facing the preform bundle (5), a substantially flat, substantially closed chain surface (28, 29).

20. Moulding-chain installation according to one of Claims 11 to 19,
**characterized**
**in that** a flexible strip (19, 20) is arranged between the working strand of the moulding chain (1, 2) and the working path of the preform bundle (5) .

21. Moulding-chain installation according to Claim 20,
**characterized**
**in that** the flexible strip (19, 20) is arranged along the outer side of the moulding chain (1, 2) and circulates together with the moulding chain (1, 2).

22. Moulding-chain installation according to Claim 20,
**characterized**
**in that** the flexible strip (19, 20) is fed to the working path of the preform bundle (5) together with the rovings (6) and/or woven-fabric, knitted-fabric or nonwoven webs (6).

23. Moulding-chain installation according to Claim 21,
**characterized**
**in that** the flexible strip (19, 20) is fed to the working path of the preform bundle (5) together with the rovings (6) and/or woven-fabric, knitted-fabric or nonwoven webs (6).

24. Moulding-chain installation according to one of Claims 21 to 23,
**characterized**
**in that** the surface, facing the preform bundle (5), of the flexible strip (19, 20) or the surface (28, 29), facing the preform bundle (5), of the moulding chain (1, 2) has a non-smooth surface profile.

25. Moulding-chain installation according to one of Claims 11 to 24,
**characterized by**
a device for feeding inlay parts (9) or reinforcement layers (9), for example woven-fabric, knitted-fabric or nonwoven blanks, prepreg blanks and/or force transmission components, and for positioning the inlay parts (9) or reinforcement layers (9) in or on the preform bundle (5).

## Revendications

1. Procédé pour la fabrication en continu d'éléments profilés en matériau composite fibreux au moyen d'une installation de chaînes de façonnage, le matériau composite fibreux comprenant un matériau matriciel et un agencement de fibres de renfort (6), avec les étapes de procédé suivantes :
a. Acheminement de faisceaux de fibres continus et/ou de bandes continues de tissu fibreux, bandes tricotées ou bandes de non tissé (6),
b. Réunion (7, 8) des faisceaux et/ou des bandes en un paquet préfaçonné continu (5),
c. Arrangement du paquet préfaçonné (5) sur un brin de travail (21, 22) au moins d'une chaîne de façonnage circulant (1, 2) de l'installation de chaînes de façonnage,
d. Guidage du paquet préfaçonné (5) au moyen du brin de travail (21, 22) de l'au moins une chaîne de façonnage (1, 2) par l'installation de chaînes de façonnage par formation d'un profilé continu (17) par durcissement du matériau matriciel,
e. Ejection du profilé continu (17) de l'installation de chaînes de façonnage,
f. Mise à longueur du profilé continu (17) pour l'élément profilé (13),
les faisceaux ou bandes (6) étant préimprégnés avec le matériau matriciel et/ou étannt imprégnés pendant une des étapes du procédé a), b) ou c) avec le matériau matriciel, le brin de travail (21, 22) de l'au moins une chaîne de façonnage (1, 2) étant guidé de façon coulissante le long d'un guidage coulissant (15) sur le côté du brin de travail (21, 22) opposé au paquet préfaçonné (5) et la surface extérieure de la chaîne de façonnage (1, 2) étant formée par les éléments de surface (a, b , c, d),
**caractérisé en ce que** le guidage coulissant de chaîne de façonnage (15) comporte au moins une courbe, le rayon de courbe du guidage coulissant de la chaîne de façonnage (15) pouvant être réglé de façon variable et l'élément profilé recevant dans l'étape de procédé d) à l'aide de la courbe du guidage coulissant de chaîne de façonnage (15) et/ou à l'aide de cavités (11) et/ou d'élévations (12) dans la surface de la chaîne de façonnage, qui s'étendent le long de la direction longitudinale de la chaîne sur plusieurs éléments de surface (a, b, c, d), une allure pouvant pour l'essentiel être choisie librement eu égard à son axe longitudinal, à sa forme de section et/ou à sa surface longitudinale.

2. Procédé selon la revendication 1,
**caractérisé en ce que**
l'arrangement et le guidage du paquet préfaçonné (5) a lieu dans l'étape de procédé c) sur le brin de travail (21, 22) de deux chaînes de façonnage (1, 2) d'une installation de chaînes de façonnage.

3. Procédé selon la revendication 1 ou 2,
**caractérisé en ce que**
dans l'étape de procédé c), l'arrangement et le guidage du paquet préfaçonné (5) ont lieu en plus sur au moins une plaque de guidage (23, 24), le brin de travail (21, 22) de l'au moins une chaîne de façonnage (1, 2) et l'au moins une plaque de guidage (23, 24) englobant longitudinalement de tous côtés le paquet préfaçonné (5).

4. Procédé selon la revendication 2 ou 3,
**caractérisé en ce que**
dans l'étape de procédé c), les chaînes de façonnage (1, 2) et/ou les plaques de guidage disposées opposées les unes aux autres eu égard au chemin de travail du paquet préfaçonné (5) sont comprimées l'une contre l'autre au moyen d'un dispositif de prétension.

5. Procédé selon la revendication 2 ou 3,
**caractérisé en ce que**
le brin de travail (21, 22) de l'au moins une chaîne de façonnage (1, 2) et/ou l'au moins une plaque de guidage (23, 24) sont chauffés pour accélérer le durcissement du matériau matriciel.

6. Procédé selon l'une quelconque des revendications 1 à 5,
**caractérisé en ce que**
dans une autre étape de procédé a') au moins un insert (9) est positionné entre ou sur les faisceaux (6), tissus, tricotés ou non-tisssés (6) acheminés et est inséré à la suite dans le paquet préfaçonné (5) et laminé dans l'élément profilé continu (17).

7. Procédé selon la revendication 6,
**caractérisé en ce**
**que** l'au moins un insert (9) comprend au moins une découpe de préimprégné (9) plane.

8. Procédé selon la revendication 6 ou 7,
**caractérisé en ce**
**que** l'au moins un insert (9) comprend au moins une découpe de tissu, de tricoté ou de non-tissé (9).

9. Procédé selon l'une quelconque des revendication 6 à 8,
**caractérisé en ce**
**que** l'au moins un insert est un élément d'introduction de force (9).

10. Procédé selon l'une quelconque des revendications 1 à 9,
**caractérisé en ce que**
dans l'étape de procédé c) une bande élastique en flexion (19, 20) est entraînée entre le paquet préfaçonné (5) et l'au moins une chaîne de façonnage (1, 2) ou entre le paquet préfaçonné (5) et l'au moins une plaque de guidage (23, 24).

11. Installation de chaînes de façonnage pour la fabrication en continu d'éléments profilés composites fibreux à partir d'un paquet préfaçonné continu (5), le paquet préfaçonné (5) comprenant un agencement de fibres de renfort imprégné d'un matériau matriciel, l'installation de chaînes de façonnage comprenant au moins une première chaîne de façonnage (1, 2) circulant en continu, avec un brin de travail (21, 22) tourné vers le chemin de travail du paquet préfaçonné (5) pour guider et comprimer le paquet préfaçonné (5) pendant le durcissement du matériau matriciel, le brin de travail (21, 22) de l'au moins une chaîne de façonnage (1, 2) étant guidé de façon coulissante le long d'un guidage coulissant (15) sur le côté du brin de travail (21, 22) opposé au paquet préfaçonné (5) et la surface extérieure de la chaîne de façonnage (1, 2) étant formée par des éléments de surfaces (a, b, c, d),
**caractérisée en ce que**
le guidage coulissant de chaîne de façonnage (15) comporte au moins une courbe, le rayon de courbe du guidage coulissant de chaîne de façonnage (15) pouvant être réglé de façon variable et la surface du brin de travail (21, 22) de l'au moins une chaîne de façonnage (1, 2) présentant à l'aide de la courbe du guidage coulissant de chaîne de façonnage (15) et/ou à l'aide de cavités (11) et/ou d'élévations (12) dans la surface de la chaîne de façonnage, qui s'étendent le long de la direction longitudinale de la chaîne sur plusieurs éléments de surface (a, b, c, d), une allure pouvant pour l'essentiel être choisie librement eu égard à l'axe longitudinal de l'élément profilé, à la forme de section de l'élément profilé et/ou à la surface longitudinale de l'élément profilé.

12. Installation de chaînes de façonnage selon la revendication 11,
**caractérisée en ce que**
le guidage coulissant (15) le long du chemin du brin de travail (21, 22) de la chaîne de façonnage (1, 2) décrit un rayon.

13. Installation de chaînes de façonnage selon la revendication 11 ou 12,
**caractérisée en ce que**
les éléments de surface (a, b, c, d) peuvent être déplacés l'un par rapport à l'autre au moins légèrement le long de la direction longitudinale de chaîne.

14. Installation de chaînes de façonnage selon la revendication 13,
**caractérisée en ce que**
les éléments de surface (a, b, c, d) présentent en partant de leur surface (28, le 29) une contre-dépouille (30) en direction de leur zone de pied.

15. Installation de chaînes de façonnage selon l'une quelconque des revendications 11 à 14, **caractérisée par**
une plaque de guidage (23, 24) disposée de l'autre côté de la première chaîne de façonnage (1), eu égard au chemin de travail du paquet préfaçonné (5) .

16. Installation de chaînes de façonnage selon l'une quelconque des revendications 11 à 15,
**caractérisée par**
une autre chaîne de façonnage (2) disposée de l'autre côté de la première chaîne de façonnage (1), eu égard au chemin de travail du paquet préfaçonné (5).

17. Installation de chaînes de façonnage selon l'une quelconque des revendications 11 à 16,
**caractérisée par**
une plaque de guidage (23, 24) disposée au moins le long du chemin de travail du paquet préfaçonné (5) à angle droit d'au moins une chaîne de façonnage (1, 2).

18. Installation de chaînes de façonnage selon l'une quelconque des revendications 15 à 17,
**caractérisée en ce que**
les chaînes de façonnage (1, 2) et/ou les plaques de guidage (23, 24) disposées opposées l'une à l'autre, eu égard au chemin de travail du paquet préfaçonné (5), peuvent être pressées l'une contre l'autre au moyen d'un dispositif de prétension (16, 25) .

19. Installation de chaînes de façonnage selon l'une quelconque des revendications 11 à 18,
**caractérisée en ce que**
la chaîne de façonnage (1, 2) forme sur le côté tourné vers le paquet préfaçonné (5) une surface de chaîne (28, 29) pour l'essentiel lisse, pour l'essentiel fermée.

20. Installation de chaînes de façonnage selon l'une quelconque des revendications 11 à 19,
**caractérisée en ce**
**qu'**une bande élastique en flexion (19, 20) est disposée entre le brin de travail de la chaîne de façonnage (1, 2) et le chemin de travail du paquet préfaçonné (5).

21. Installation de chaînes de façonnage selon la revendication 20,
**caractérisée en ce que**
la bande élastique en flexion (19, 20) est disposée le long du côté extérieur de la chaîne de façonnage (1, 2) et circule ensemble avec la chaîne de façonnage (1, 2).

22. Installation de chaînes de façonnage selon la revendication 20,
**caractérisée en ce que**
la bande élastique en flexion (19, 20) est acheminée au chemin de travail du paquet préfaçonné (5) ensemble avec les faisceaux de fibres (6) et/ou bandes de tissu, bandes tricotées ou bandes non tissées (6).

23. Installation de chaînes de façonnage selon la revendication 21,
**caractérisée en ce que**
la bande élastique en flexion (19, 20) est acheminée au chemin de travail du paquet préfaçonné (5) ensemble avec les faisceaux de fibres (6) et/ou bandes de tissu, bandes tricotées ou bandes non tissées (6).

24. Installation de chaînes de façonnage selon l'une quelconque des revendications 21 à 23,
**caractérisée en ce que** la surface de la bande élastique en flexion (19, 20), tournée vers le paquet préfaçonné (5) ou la surface (28, 29) de la chaîne de façonnage (1, 2), tournée vers le paquet préfaçonné (5), présente un profil de surface non lisse.

25. Installation de chaînes de façonnage selon l'une quelconque des revendications 11 à 24,
**caractérisée par**
un dispositif destiné à acheminer des inserts (9) ou des couches de renfort (9), par ex. des découpes de tissu, des découpes tricotées, ou non tissées, des découpes de préimprégné et/ou des éléments d'introduction de force et destiné à positionner les inserts (9) ou couches de renfort (9) dans ou sur le paquet préfaçonné (5).
